(19) Europäisches Patentamt
European Patent Office
Office européen des brevets

(11) **EP 3 719 065 B1**

(12) **FASCICULE DE BREVET EUROPEEN**

(45) Date de publication et mention de la délivrance du brevet:
**09.08.2023 Bulletin 2023/32**

(21) Numéro de dépôt: **20163320.3**

(22) Date de dépôt: **16.03.2020**

(51) Classification Internationale des Brevets (IPC):
**C08K 3/013** (2018.01)    **C08L 27/12** (2006.01)

(52) Classification Coopérative des Brevets (CPC):
(C-Sets disponibles)
**C08L 27/16;** C08K 2201/002; C08L 2205/03;
F16L 11/04                                    (Cont.)

(54) **COMPOSITION DE CAOUTCHOUC, SON PROCÉDÉ DE PRÉPARATION, TUYAU DE CARBURANT ET CIRCUIT D'ALIMENTATION EN CARBURANT L'INCORPORANT**

KAUTSCHUKZUSAMMENSETZUNG, IHR HERSTELLUNGSVERFAHREN, KRAFTSTOFFSCHLAUCH UND DIESEN UMFASSENDEN SCHALTKREIS FÜR DIE KRAFTSTOFFVERSORGUNG

RUBBER COMPOSITION, METHOD FOR PREPARING SAME, FUEL PIPE AND FUEL SUPPLY CIRCUIT INCLUDING SAME

(84) Etats contractants désignés:
AL AT BE BG CH CY CZ DE DK EE ES FI FR GB GR HR HU IE IS IT LI LT LU LV MC MK MT NL NO PL PT RO RS SE SI SK SM TR

(30) Priorité: **05.04.2019 FR 1903699**

(43) Date de publication de la demande:
**07.10.2020 Bulletin 2020/41**

(73) Titulaire: **HUTCHINSON**
**75008 Paris (FR)**

(72) Inventeurs:
• **LABORBE, Elise**
**45490 Courtempierre (FR)**
• **BICHAT, Mélissande**
**45210 Griselles (FR)**
• **PICHON, Antoine**
**45200 Amilly (FR)**
• **DELAS, Laurent**
**45700 Villemandeur (FR)**

(74) Mandataire: **Plasseraud IP**
**66, rue de la Chaussée d'Antin**
**75440 Paris Cedex 09 (FR)**

(56) Documents cités:
DE-A1-102014 223 979    US-A1- 2018 346 664

(52) Classification Coopérative des Brevets (CPC):
(Cont.)

C-Sets
**C08L 27/16, C08L 27/18, C08K 3/346**

## Description

### Domaine technique

L'invention concerne une composition de caoutchouc réticulable apte à être extrudée pour former une couche interne d'un tuyau de carburant pour véhicule automobile à moteur thermique ou hybride, un procédé de préparation de cette composition réticulable, une composition de caoutchouc réticulée apte à former une couche interne extrudée de ce tuyau, un extrudât tubulaire apte à former cette couche interne, ce tuyau de carburant et un circuit d'alimentation de carburant d'un véhicule automobile l'incorporant. L'invention s'applique notamment à des pièces extrudées telles qu'un tuyau multicouche véhiculant un carburant de type essence à plusieurs couches en caoutchouc avec intercalation d'un renfort textile (bien que d'autres structures multicouche soient envisageables pour ce tuyau et que ce dernier soit apte à véhiculer d'autres carburants, par exemple de type diesels ou biocarburants), et à des pièces injectées imperméables à de tels carburants comme par exemple des membranes, des joints ou des profilés d'étanchéité.

### Technique antérieure

De manière connue, les tuyaux d'un système d'alimentation de carburant d'un véhicule automobile comprennent une couche interne usuellement à base d'un fluoroélastomère (caoutchouc FKM) et au moins une couche externe par exemple à base d'un caoutchouc d'épichlorhydrine (ECO), souvent avec intercalation d'une couche intermédiaire pouvant être également à base d'un ECO et d'un renfort textile.

EP 3 026 078 A1 (ou son équivalent DE 10 2014 223979 A1) divulgue un tuyau pour véhicule automobile comportant une couche interne servant de barrière aux milieux agressifs et une couche externe en caoutchouc réticulé. La couche interne est constituée d'une composition de caoutchouc qui est à base d'au moins un FKM, comprend une poudre à base d'au moins un polymère fluoré tel qu'un PTFE selon une quantité maximale de 5 pce (pce : parties en poids pour 100 parties d'élastomère(s)) et qui est prévue pour présenter une efficacité dynamique et une résistance à la propagation des déchirures améliorées.

DE 10 2009 003 528 A1 divulgue une composition de caoutchouc vulcanisé par exemple pour une couche interne d'un tuyau e.g. de carburant qui est prévue pour résister à l'abrasion et aux fluides. La composition comprend notamment au moins un caoutchouc, un polymère thermoplastique fluoré tel qu'un PTFE et de préférence du noir de carbone à titre de charge renforçante, le polymère thermoplastique fluoré étant présent dans la composition sous forme de poudre dégradée.

Ces tuyaux de carburant connus présentent usuellement des résistances au carburant et au gonflement satisfaisantes notamment grâce à leur couche interne à base d'un FKM, cependant leur perméabilité au carburant véhiculé ne satisfait pas toujours aux exigences de plus en plus sévères pour réduire au minimum les émissions toxiques des moteurs thermiques. En particulier, un nombre croissant de véhicules automobiles à moteurs à essence doivent satisfaire à des normes environnementales très contraignantes, telles que la norme américaine « PZEV » (« Partial Zero Emission Vehicle » pour « véhicule à très faible émission polluante ») qui impose un seuil maximal d'émission de carburant évaporé de 2 mg/jour. On a donc cherché ces dernières années à réduire encore la perméabilité aux carburants des tuyaux les acheminant dans les circuits d'alimentation des véhicules automobiles.

### Exposé de l'invention

Un but de la présente invention est donc de proposer une composition de caoutchouc pour une pièce extrudée telle qu'un tuyau de carburant qui remédie notamment à cet inconvénient, sans pénaliser l'aptitude à la mise en oeuvre par extrusion de la composition réticulable et les propriétés mécaniques de la composition réticulée, ou pour une pièce injectée également imperméable à un carburant telle qu'une membrane, un joint ou un profilé d'étanchéité.

Ce but est atteint en ce que la Demanderesse vient de découvrir d'une manière surprenante que si l'on disperse dans au moins un fluoroélastomère une quantité suffisamment élevée d'une poudre micronisée d'un polymère thermoplastique fluoré combinée à une charge inorganique qui est à base d'un phyllosilicate choisi parmi la kaolinite et les micas ou d'un talc et qui présente un haut facteur de forme supérieur à 30, alors on peut obtenir une composition de caoutchouc réticulable (i.e. non réticulée) qui est apte à former une couche interne extrudée d'un tuyau de carburant pour véhicule automobile, la composition présentant notamment à la fois :

- une perméabilité réduite à l'état réticulé, tant en comparaison d'une composition témoin dépourvue de cette combinaison que d'une composition non conforme à l'invention comprenant ladite poudre micronisée mais dépourvue de cette charge inorganique à haut facteur de forme,
- des propriétés mécaniques au moins conservées, en comparaison de ces compositions témoin et non conformes à l'invention, et

- une aptitude à la mise en oeuvre par extrusion améliorée à l'état réticulable, en comparaison de cette composition non conforme à l'invention.

Plus précisément, une composition de caoutchouc réticulable selon l'invention, telle que définie à la revendication 1, est à base d'au moins un fluoroélastomère (FKM) et comprend une charge et une poudre micronisée d'au moins un polymère thermoplastique fluoré qui sont dispersées dans ledit au moins un fluoroélastomère, ladite poudre micronisée étant à base d'au moins un polytétrafluoroéthylène (PTFE) modifié ou non à titre dudit au moins un polymère thermoplastique fluoré, et présentant un diamètre moyen de particules D50 mesuré selon la norme ASTM D 4464 qui est compris entre 2 $\mu$m et 20 $\mu$m.

Selon l'invention, la composition comprend ladite poudre micronisée selon une quantité supérieure à 20 pce (pce : parties en poids pour 100 parties d'élastomère(s)) et la charge comprend au moins une charge inorganique à lamelles qui présente un facteur de forme supérieur à 30 et qui est à base d'un phyllosilicate choisi parmi la kaolinite et les micas, ou est à base d'un talc, ledit facteur de forme étant défini comme étant le ratio d'une dimension moyenne la plus grande sur une dimension moyenne la plus petite des lamelles, ledit ratio étant mesuré par la technique de microscopie électronique à balayage via un capteur Centaurus® d'électrons rétrodiffusés ou un capteur SE2 d'électrons secondaires, en préparant des échantillons des charges par une métallisation Au/Pd.

Par l'expression « à base de », on entend dans la présente description que la composition ou l'ingrédient considéré comprend majoritairement en poids le constituant concerné, i.e. selon une fraction massique supérieure à 50 %, de préférence supérieure à 75 % et pouvant aller jusqu'à 100 %.

Par « charge », on entend dans la présente description une ou plusieurs charge(s) individuelle(s) de grade(s) renforçant(s) ou non pour l'élastomère concerné qui est/ sont dispersée(s) de manière homogène dans la composition, et par « charge inorganique » on entend une charge claire (parfois appelée « charge blanche »), par opposition aux charges organiques renforçantes ou non telles que les noirs de carbone et le graphite, par exemple.

Par « phyllosilicate », on entend de manière connue dans la présente description un sous-groupe du groupe des silicates, les phyllosilicates étant construits par empilement de couches tétraédriques (« T ») où les tétraèdres partagent trois sommets sur quatre (les oxygènes « basaux »), le quatrième sommet (l'oxygène « apical ») étant reliée à une couche octaédrique (« O ») occupée par des cations différents.

Par « kaolinite », on entend de manière connue dans la présente description une espèce minérale de phyllosilicate composée de silicate d'aluminium hydraté, de formule $Al_2Si_2O_5(OH)_4$.

Par « mica », on entend de manière connue dans la présente description un groupe minéral à l'intérieur des phyllosilicates principalement à base de silicate d'aluminium et de potassium, le groupe des micas se subdivisant en une multitude de sous-groupes.

Par « talc », on entend de manière connue dans la présente description une espèce minérale composée de silicate de magnésium doublement hydroxylé de formule $Mg_3Si_4O_{10}(OH)_2$, pouvant contenir des traces de nickel, de fer, d'aluminium, de calcium, de sodium et d'autres silicates magnésiens, étant précisé que nombre de talcs usuels présentent un facteur de forme inférieur ou égal à 30 et ne sont donc pas utilisables dans une composition selon l'invention.

Par « facteur de forme » (« aspect ratio » en anglais), on entend de manière connue dans la présente description le ratio de la dimension moyenne la plus grande (usuellement largeur ou longueur) sur la dimension moyenne la plus petite (usuellement épaisseur) caractérisant les lamelles de la charge inorganique.

On notera qu'une composition réticulable selon l'invention présente avantageusement un glissement minimisé vis-à-vis des parois d'une extrudeuse, comme expliqué dans les exemples ci-après. En effet, la Demanderesse a démontré dans ses essais que l'ajout de ladite charge inorganique à haut facteur de forme à une quantité suffisante de la poudre micronisée fluorée permet d'améliorer l'aptitude à la mise en oeuvre de la composition comprenant le mélange FKM - poudre fluorée en extrusion, en apportant une solution au problème technique suivant dû à la poudre fluorée qui réside notamment dans :

- une alimentation insatisfaisante de l'extrudeuse, se traduisant par un phénomène de refoulement de la composition au niveau du galet bourreur, et/ou dans
- une forte irrégularité de la pression en sortie d'extrudeuse, due au glissement de la composition en cours d'extrusion sur la vis.

Ce problème est résolu dans l'invention par l'ajout de ladite charge, spécifiquement inorganique à haut facteur de forme telle que définie ci-dessus, qui permet de manière inattendue d'éviter ou au moins de minimiser les phénomènes de glissement de la composition réticulable dans la filière d'extrusion, ce qui rend possible la mise en oeuvre industrielle des compositions selon l'invention pour former des couches internes extrudées de tuyaux.

De plus, la Demanderesse a également démontré que l'ajout à ladite poudre de polymère(s) thermoplastique(s) fluoré(s) de ladite charge inorganique à haut facteur de forme, non seulement ne pénalise pas les propriétés mécaniques de la composition réticulée, mais encore de manière surprenante diminue encore la perméabilité au carburant de cette composition en comparaison de ladite composition non conforme à l'invention (avec ladite poudre fluorée mais sans ladite charge inorganique à haut facteur de forme).

Par conséquent, la combinaison selon l'invention de ladite charge inorganique à haut facteur de forme et de ladite poudre fluorée témoigne d'un effet de synergie, allant au-delà des propriétés respectives attendues de ces deux composants en relation avec le(s) FKM de la composition.

On notera également qu'une composition de caoutchouc selon l'invention n'est pas à confondre avec une composition élastomère thermoplastique, cette composition de l'invention étant en effet notamment caractérisée par une dispersion homogène de la poudre micronisée dudit au moins un polymère thermoplastique fluoré et étant donc structurellement très différente d'un vulcanisat thermoplastique fluoré de type F-TPV en particulier (dans lequel la base en polymère thermoplastique contient une dispersion de nodules de caoutchouc).

Avantageusement, ladite au moins une charge inorganique à haut facteur de forme peut avoir une plus petite dimension transversale moyenne qui définit une épaisseur moyenne de lamelles comprise entre 100 nm et 500 nm (de préférence entre 120 nm et 480 nm, encore plus préférentiellement entre 140 nm et 460 nm) et une plus grande dimension moyenne qui définit une largeur moyenne de lamelles comprise entre 1 $\mu$m et 50 $\mu$m (de préférence entre 2 $\mu$m et 40 $\mu$m, encore plus préférentiellement entre 3 $\mu$m et 38 $\mu$m).

Selon un premier exemple de réalisation de l'invention, ladite au moins une charge inorganique à haut facteur de forme est à base dudit phyllosilicate (i.e. choisi parmi la kaolinite et les micas), dont le facteur de forme est d'au moins 35 et de préférence d'au moins 80.

Selon ce premier exemple, ladite au moins une charge inorganique à haut facteur de forme peut comprendre de la kaolinite, étant à base d'un kaolin dont de préférence une plus petite dimension transversale moyenne définit une épaisseur moyenne de lamelles comprise entre 120 nm et 280 nm et une plus grande dimension moyenne définit une largeur moyenne de lamelles comprise entre 4 $\mu$m et 12 $\mu$m.

En variante selon ce premier exemple, ladite au moins une charge inorganique à haut facteur de forme peut être à base d'un mica par exemple de type muscovite ou phlogopite dont le facteur de forme est d'au moins 120, et dont de préférence une plus petite dimension transversale moyenne définit une épaisseur moyenne de lamelles comprise entre 110 nm et 470 nm et une plus grande dimension moyenne définit une largeur moyenne de lamelles comprise entre 13 $\mu$m et 40 $\mu$m.

Selon un deuxième exemple de réalisation de l'invention, ladite au moins une charge inorganique à haut facteur de forme est à base d'un talc dont le facteur de forme est d'au moins 35, et dont une plus petite dimension transversale moyenne définit une épaisseur moyenne de lamelles de préférence comprise entre 120 nm et 180 nm et une plus grande dimension moyenne définit une largeur moyenne de lamelles de préférence comprise entre 4 $\mu$m et 8 $\mu$m.

Selon une autre caractéristique générale de l'invention, la composition réticulable peut comprendre ladite poudre micronisée d'au moins un polymère thermoplastique fluoré selon une quantité égale ou supérieure à 30 pce, de préférence égale ou supérieure à 40 pce.

Selon un exemple préférentiel de la composition réticulable selon l'invention, ladite poudre micronisée, à base dudit au moins un polytétrafluoroéthylène (PTFE) modifié ou non (e.g. optionnellement fonctionnalisé), présente un diamètre moyen de particules D50 mesuré selon la norme ASTM D 4464 qui est compris entre 5 $\mu$m et 15 $\mu$m.

Avantageusement, la charge de la composition réticulable selon l'invention comprend ladite au moins une charge inorganique à haut facteur de forme selon une fraction massique d'au moins 40 % et de préférence supérieure à 50 %. En d'autres termes, la charge de cette composition est de préférence à base de (i.e. comprend majoritairement en poids) la ou des charge(s) inorganique(s) à haut(s) facteur(s) de forme.

Selon une caractéristique préférentielle de la composition réticulable, cette composition comprend ladite poudre micronisée selon une quantité comprise entre 45 et 65 pce (de préférence entre 47 et 63 pce) et ladite au moins une charge inorganique à haut facteur de forme selon une quantité comprise entre 5 et 25 pce (de préférence entre 6 et 23 pce).

Egalement préférentiellement, la charge de la composition réticulable de l'invention peut comprendre en outre une charge organique renforçante ou non à base d'un noir de carbone et/ou d'un graphite, de préférence avec moins de 5 pce de noir de carbone de grade peu renforçant et moins de 10 pce de graphite dans la composition (encore plus préférentiellement avec moins de 3 pce de noir de carbone peu renforçant, tel qu'un noir de série MT, et moins de 8 pce de graphite).

Selon une autre caractéristique générale de l'invention, la composition réticulable peut comprendre un système de réticulation comprenant un peroxyde (incluant un système de réticulation mixte avec un peroxyde combiné à un agent réticulant non peroxyde) ou un bisphénol.

On notera que ce système de réticulation au peroxyde peut avantageusement comprendre un peroxyde organique à titre d'agent réticulant et un coagent de réticulation comprenant par exemple du triallyl cyanurate (TAC) ou du triallyl isocyanurate (TAIC), et que ce système de réticulation au peroxyde est de préférence utilisé dans la composition de l'invention selon une quantité comprise entre 2 et 6 pce (coagent inclus, encore plus préférentiellement entre 3 et 5 pce).

Selon une caractéristique avantageuse de l'invention, la composition réticulable peut présenter, après passage dans une filière d'extrusion Garvey, une pression appliquée à la composition mesurée en sortie de la filière qui est continûment comprise entre 25.10$^5$ Pa et 70.10$^5$ Pa et de préférence entre 30.10$^5$ Pa et 65.10$^5$ Pa, l'extrudeuse présentant les caractéristiques suivantes :

- une vis de transport de diamètre D égal à 25 mm et de longueur égale à 12D,
- une alimentation en bande de 2 à 3 cm de large,
- un galet bourreur refroidi avec un système de circulation d'eau,
- un corps de vis chauffé à 85° C par un régulateur au moyen d'eau,
- la filière étant chauffée à 95° C ou 110° C par un anneau chauffant,
- ladite pression appliquée à la composition en sortie de la filière étant mesurée par un capteur au niveau d'une tête de la vis,
- une vitesse de la vis variant entre 4 et 20 tours/min réglée suivant l'aspect de la composition extrudée en sortie de filière, et
- un tapis roulant sur lequel est disposée la composition pour son entraînement.

On notera que ce protocole d'extrusion a été précisément suivi par la Demanderesse pour démontrer, via cette plage de pressions mesurées en sortie de filière, que la pression en sortie d'extrusion est avantageusement maintenue en continu sensiblement constante ou au moins stabilisée dans une plage relativement étroite de valeurs, grâce à l'effet de synergie précité entre ladite poudre micronisée fluorée et ladite charge inorganique à haut facteur de forme qui permet d'éviter ou au moins de minimiser le glissement de la composition réticulable en cours d'extrusion sur la vis de la filière.

Selon un mode préférentiel de réalisation de l'invention, ledit au moins un fluoroélastomère est un FKM choisi parmi les terpolymères fluorure de vinylidène (VDF) - hexafluoropropylène (HFP) - tétrafluoroéthylène (TFE) à taux massique de fluor égal ou supérieur à 70 % (de préférence compris entre 70 et 72 %), la composition présentant de préférence une viscosité Mooney ML(1+4) à 100° C mesurée selon la norme ASTM D 1646 comprise entre 50 et 75 (de préférence comprise entre 54 et 72).

Avantageusement, la composition réticulable de l'invention peut comprendre au moins deux dits fluoroélastomères (FKM), comprenant un premier FKM et un second FKM de viscosités Mooney ML(1+10) à 121° C respectives, mesurées selon la norme ASTM D 1646, comprises entre 17 et 21 et entre 22 et 26.

Encore plus avantageusement, ce premier FKM est présent dans la composition selon une quantité d'au moins 50 pce, de préférence comprise entre 50 et 75 pce, et ce second FKM est présent dans la composition selon une quantité d'au plus 50 pce, de préférence comprise entre 25 et 50 pce.

Une composition de caoutchouc réticulée selon l'invention est apte à former une couche interne extrudée d'un tuyau de carburant pour véhicule automobile, et cette composition réticulée est le produit d'une réticulation chimique par un peroxyde ou un bisphénol de la composition réticulable de l'invention telle que définie ci-dessus.

On notera que cette réticulation de la composition peut être obtenue par cuisson, via une mise en température conventionnelle par exemple à une température comprise entre 160 et 200° C, sans étape de post-cuisson.

Selon une autre caractéristique de cette composition réticulée de l'invention, la composition peut présenter un flux de perméation Q moyen à une essence alcoolisée de type FAM B telle que décrite dans la norme DIN 51604, ledit flux de perméation étant mesuré à travers une plaque formée de la composition sur 18 jours à 40° C selon la norme D 451652 de PSA de juin 2010, qui est inférieure à 0,30 g.h$^{-1}$.m$^{-2}$ (de préférence inférieure à 0,25 g.h$^{-1}$.m$^{-2}$, pouvant être inférieure à 0,20 g.h$^{-1}$.m$^{-2}$).

On notera que ce flux de perméation moyen ainsi mesuré de la composition est réduit d'une manière significative en comparaison de celui de ladite composition de caoutchouc non conforme à l'invention comprenant ladite poudre micronisée fluorée, mais pas ladite charge inorganique à haut facteur de forme.

Avantageusement, la composition réticulée de l'invention satisfait à l'une au moins des conditions (i) à (iii) ci-après (de préférence (i) et (ii) combinées, encore plus préférentiellement (i), (ii) et (iii) combinées) :

(i) l'un au moins des modules sécants M50, M100 et M200 suivants respectivement à 50 %, 100 % et 200 % de déformation, mesurés en traction uni-axiale selon la norme ASTM D 412 :

M50 supérieur à 3 MPa, de préférence égal ou supérieur à 4 MPa,
M100 supérieur à 4 MPa, de préférence égal ou supérieur à 5 MPa,
M200 supérieur à 6 MPa, de préférence égal ou supérieur à 7 MPa ;

(ii) une résistance à la rupture R/r, mesurée en traction uni-axiale selon la norme ASTM D 412, supérieure à 8 MPa et de préférence supérieure à 10 MPa ; et
(iii) une dureté Shore A mesurée après 3 secondes selon la norme ASTM D2240 qui est supérieure à 70 et de préférence égale ou supérieure à 80.

On notera que ces propriétés mécaniques à l'état réticulé (i) et/ou (ii) et/ou (iii) qui peuvent caractériser une composition de l'invention sont avantageusement du même ordre de grandeur ou même améliorées par rapport aux mêmes propriétés de ladite composition non conforme à l'invention comprenant ladite poudre micronisée fluorée, mais pas ladite charge inorganique à haut facteur de forme.

Un procédé de préparation selon l'invention d'une composition réticulable telle que définie ci-dessus comprend les étapes suivantes :

a) mélangeage thermomécanique dudit au moins un FKM, de ladite charge et de ladite poudre micronisée d'au moins un polymère thermoplastique fluoré et d'autres ingrédients de la composition à l'exception d'un système de réticulation, le mélangeage étant de préférence mis en oeuvre à une température de tombée entre 90 et 100° C avec une température au pic entre 105 et 115° C;

b) malaxage mécanique du mélange obtenu à l'étape a) sur des cylindres avec ajout du système de réticulation comprenant de préférence un peroxyde ou un bisphénol, pour l'obtention de la composition réticulable.

On notera que l'étape a) peut être mise en oeuvre dans un mélangeur interne, avec une pression de piston allant par exemple de $10^5$ Pa à $3.10^5$ Pa, et que l'étape b) peut être mise en oeuvre dans un mélangeur ouvert et comprendre une pluralité de passages au fin.

Un extrudât tubulaire selon l'invention est apte à former après réticulation une couche interne d'un tuyau de carburant pour véhicule automobile, et cet extrudât est constitué d'une composition réticulable (i.e. non encore réticulée) telle que définie ci-dessus.

Comme expliqué ci-dessus, on notera que la présente invention n'est pas limitée à des extrudâts et concerne également des pièces non extrudées imperméables à un carburant, pouvant être par exemple injectées (e.g. pièces façonnées via un moulage par injection de la composition réticulable).

Un tuyau de carburant pour véhicule automobile à moteur thermique ou hybride selon l'invention, en particulier pour un carburant de type essence, comporte une couche radialement interne et au moins une couche radialement externe, et selon l'invention la couche radialement interne est constituée d'une composition réticulée telle que définie ci-dessus, le tuyau comportant de préférence en outre, entre les couches radialement interne et externe, au moins une couche radialement intermédiaire et un renfort textile.

On notera que ce tuyau de l'invention est ainsi obtenu par (co)réticulation de ses couches de caoutchouc, réalisée par une mise en température appropriée (cuisson par exemple entre 160 et 200° C), comme connu dans l'art antérieur.

Un circuit d'alimentation de carburant d'un véhicule automobile à moteur thermique ou hybride selon l'invention, ce circuit comprenant des canalisations entre un réservoir de carburant et une rampe d'injection du carburant, est tel que l'une au moins des canalisations comprend un tuyau tel que défini ci-dessus.

**Brève description des dessins**

D'autres caractéristiques, avantages et détails de la présente invention ressortiront à la lecture de la description suivante de plusieurs exemples de réalisation de l'invention, donnés à titre illustratif en relation avec les dessins joints, parmi lesquels :

**Fig. 1a**

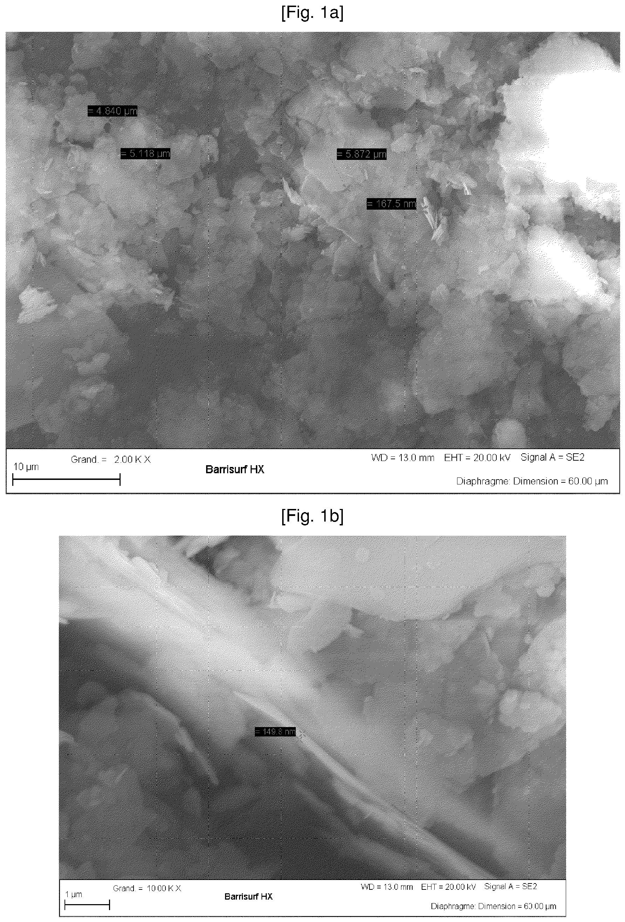

[Fig. 1a] est un cliché au microscope électronique à balayage (MEB ci-après) d'une charge inorganique à haut facteur de forme Barrisurf® HX (kaolin) testée selon l'invention montrant des épaisseurs et largeurs de lamelles.

**Fig. 1b**
[Fig. 1b] est un autre cliché au MEB de la charge inorganique de la figure 1a montrant l'épaisseur d'une lamelle.

**Fig. 2a**

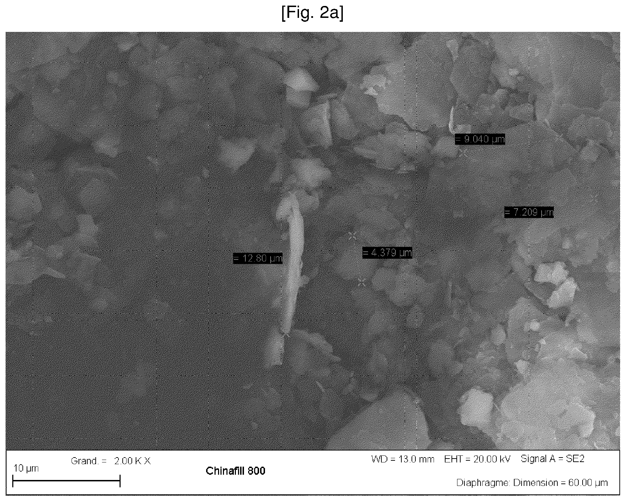

[Fig. 2a] est un cliché au MEB d'une autre charge inorganique à haut facteur de forme Chinafill ® 800 (kaolin) testée selon l'invention montrant des largeurs de lamelles.

**Fig. 2b**

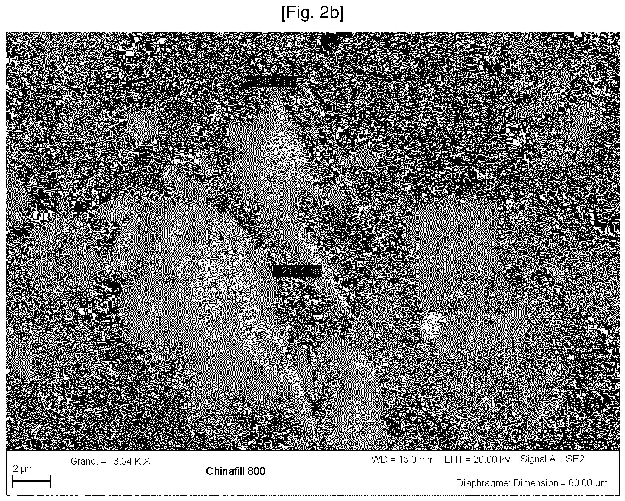

[Fig. 2b] est un autre cliché au MEB de la charge inorganique de la figure 2a montrant des épaisseurs de lamelles.

**Fig. 3a**

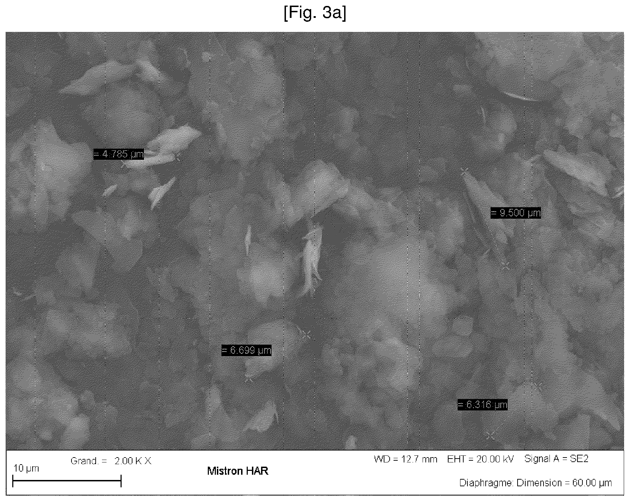

[Fig. 3a] est un cliché au MEB d'une charge inorganique à haut facteur de forme Mistron® HAR (talc) testée selon l'invention montrant des largeurs de lamelles.

**Fig. 3b**

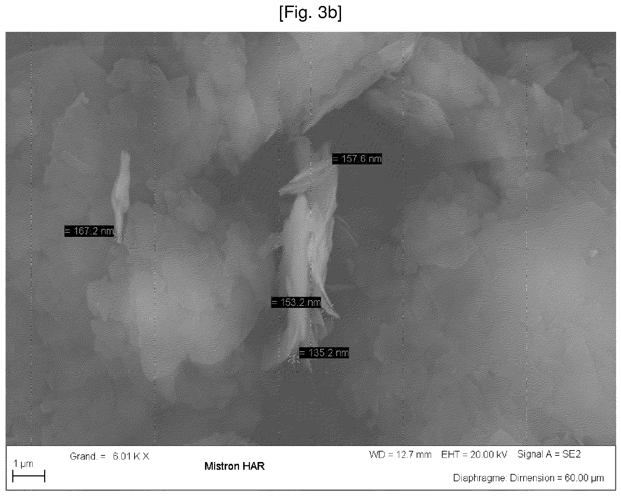

[Fig. 3b] est un autre cliché au MEB de la charge inorganique de la figure 3a montrant des épaisseurs de lamelles.

**Fig. 4a**

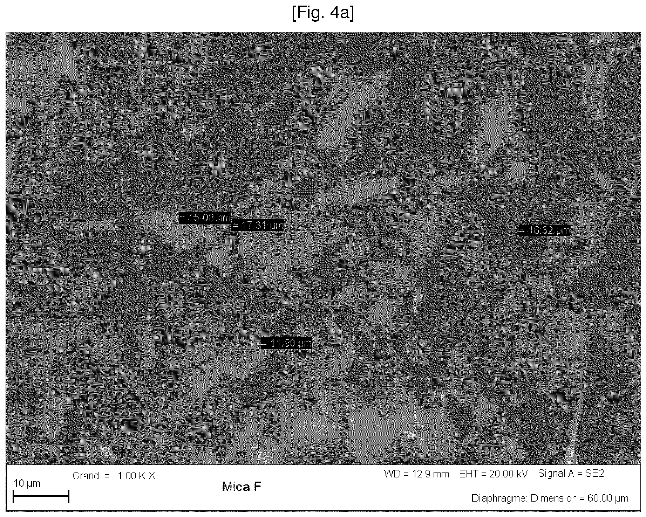

[Fig. 4a] est un cliché au MEB d'une charge inorganique à haut facteur de forme « Mica F » (mica) testée selon l'invention montrant des largeurs de lamelles.

Fig. 4b

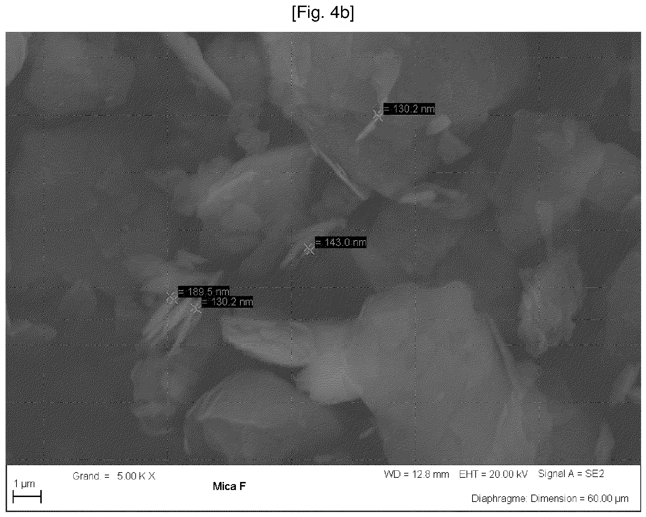

[Fig. 4b] est un autre cliché au MEB de la charge inorganique de la figure 4a montrant des épaisseurs de lamelles.

**Fig. 5a**

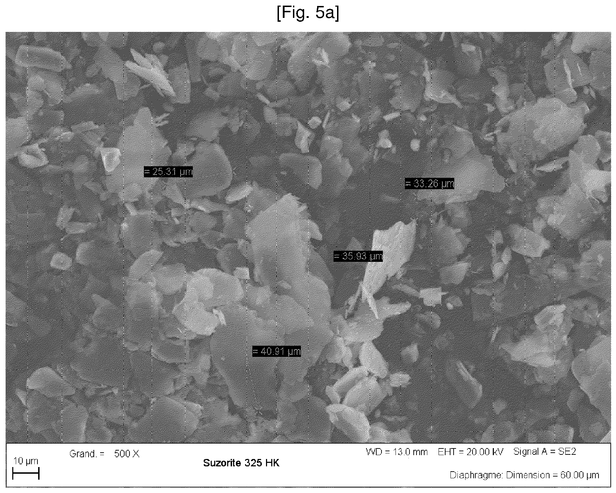

[Fig. 5a] est un cliché au MEB d'une charge inorganique à haut facteur de forme Suzorite® 325 HK (mica) testée selon l'invention montrant des largeurs de lamelles.

**Fig. 5b**

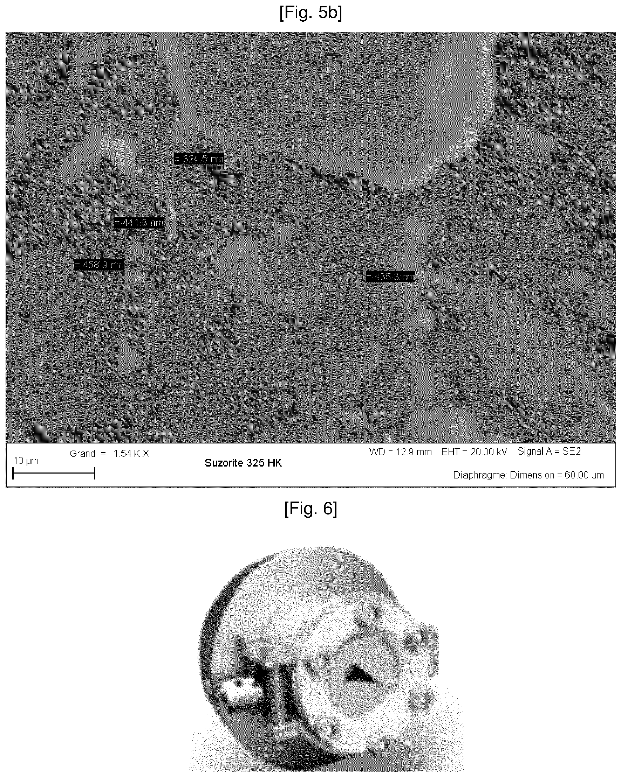

[Fig. 5b] est un autre cliché au MEB de la charge inorganique de la figure 5a montrant des épaisseurs de lamelles.

**Fig. 6**

[Fig. 6] est un photographie montrant en perspective une filière d'extrusion Garvey utilisée dans l'invention pour tester l'aptitude à la mise en oeuvre par extrusion des compositions réticulables de l'invention.

**Fig. 7a**

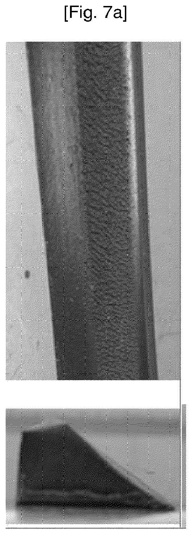

[Fig. 7a] comprend deux photographies supérieures et inférieures montrant respectivement le dessus et une extrémité d'un extrudât d'une composition témoin A, obtenu par la filière de la figure 6.

**Fig. 7b**

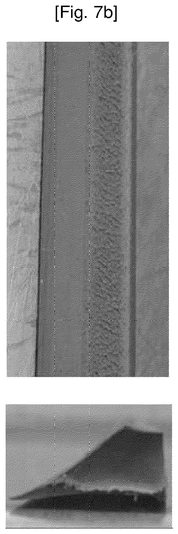

[Fig. 7b] comprend deux photographies supérieures et inférieures montrant respectivement le dessus et une extrémité d'un extrudât d'une composition B selon l'invention incorporant la charge Chinafill® 800, obtenu par la filière de la figure 6.

**Fig. 7c**

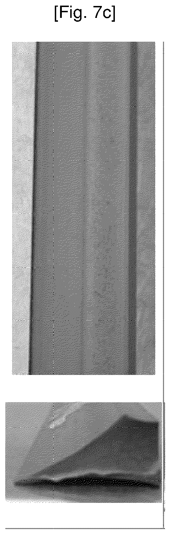

[Fig. 7c] comprend deux photographies supérieures et inférieures montrant respectivement le dessus et une extrémité d'un extrudât d'une composition C selon l'invention incorporant la charge Chinafill® 800, obtenu par la filière de la figure 6.

**Fig. 7d**

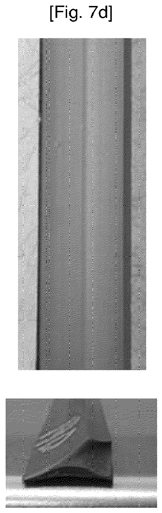

[Fig. 7d] comprend deux photographies supérieures et inférieures montrant respectivement le dessus et une extrémité d'un extrudât d'une composition D selon l'invention incorporant la charge Chinafill® 800, obtenu par la filière de la figure 6.

**Fig. 7e**

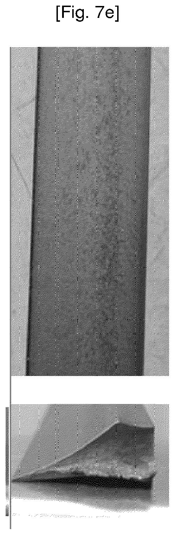

[Fig. 7e] comprend deux photographies supérieures et inférieures montrant respectivement le dessus et une extrémité d'un extrudât d'une composition E selon l'invention incorporant la charge Chinafill® 800 et du graphite, obtenu par la filière de la figure 6.

**Fig. 7f**

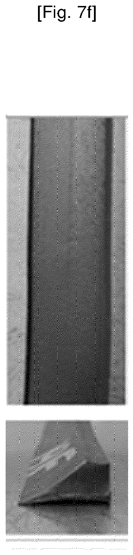

[Fig. 7f] comprend deux photographies supérieures et inférieures montrant respectivement le dessus et une extrémité d'un extrudât d'une composition F non conforme à l'invention incorporant une quantité insuffisante de poudre micronisée fluorée et du noir de carbone à la place de la charge inorganique, obtenu par la filière de la figure 6.

**Fig. 7g**

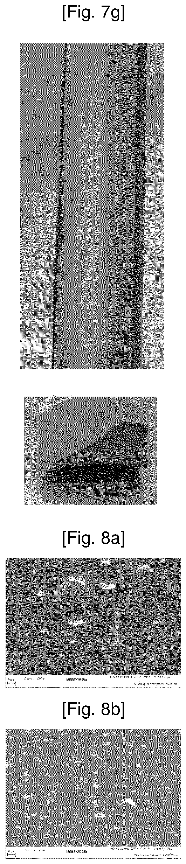

[Fig. 7g] comprend deux photographies supérieures et inférieures montrant respectivement le dessus et une extrémité d'un extrudât d'une composition G selon l'invention incorporant la charge Chinafill® 800 et du graphite, obtenu par la filière de la figure 6.

**Fig. 8a**

[Fig. 8a] est un cliché au MEB de la composition témoin A montrant notamment la morphologie de la dispersion de la poudre micronisée fluorée et du noir de carbone.

EP 3 719 065 B1

**Fig. 8b**

[Fig. 8b] est un cliché au MEB de la composition B selon l'invention montrant notamment la morphologie de la dispersion de la poudre fluorée et de sa charge inorganique Chinafill® 800.

**Fig. 8c**

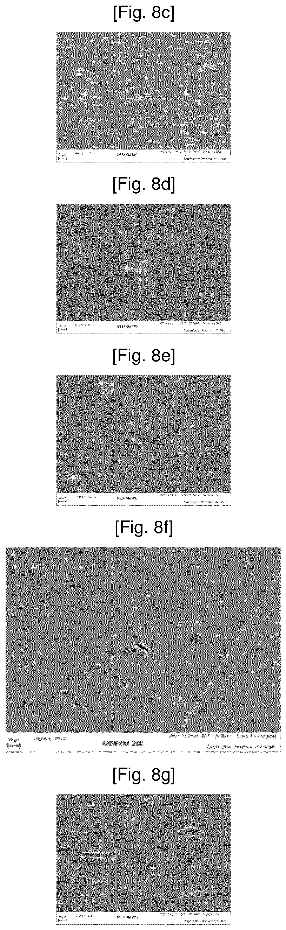

[Fig. 8c] est un cliché au MEB de la composition C selon l'invention montrant notamment la morphologie de la dispersion de la poudre fluorée et de sa charge inorganique Chinafill® 800.

**Fig. 8d**

[Fig. 8d] est un cliché au MEB de la composition D selon l'invention montrant notamment la morphologie de la dispersion de la poudre fluorée et de sa charge inorganique Chinafill® 800.

**Fig. 8e**

[Fig. 8e] est un cliché au MEB de la composition E selon l'invention montrant notamment la morphologie de la dispersion de la poudre fluorée, de sa charge inorganique Chinafill® 800 et d'un graphite.

**Fig. 8f**

[Fig. 8f] est un cliché au MEB de la composition F non conforme à l'invention montrant notamment la morphologie de la dispersion de la poudre fluorée et du noir de carbone qu'elle contient.

**Fig. 8g**

[Fig. 8g] est un cliché au MEB de la composition G selon l'invention montrant notamment la morphologie de la dispersion de la poudre fluorée, de sa charge inorganique Chinafill® 800 et d'un graphite.

**Fig. 8h**

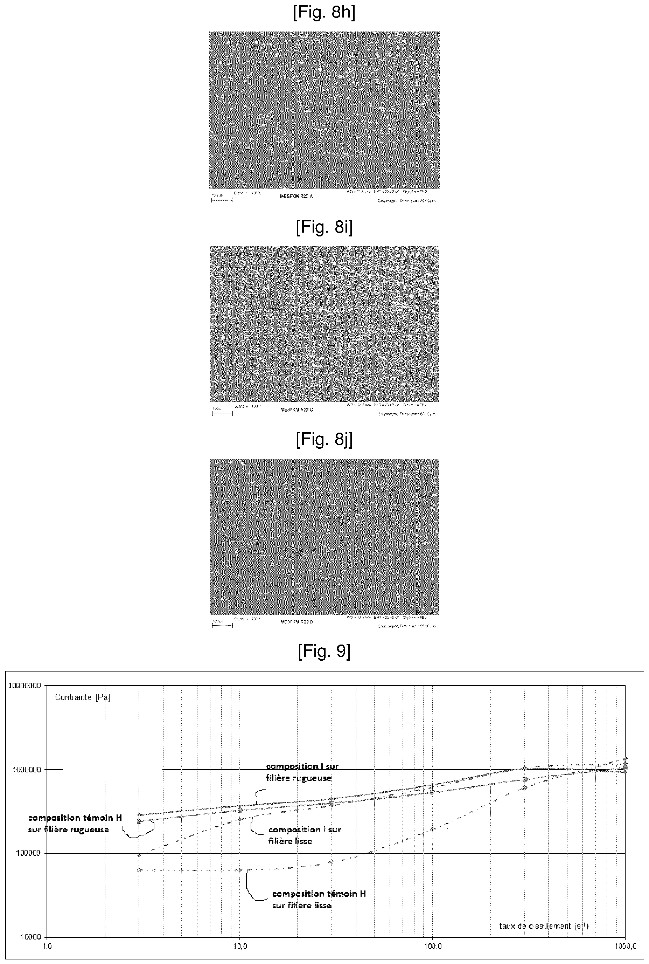

[Fig. 8h] est un cliché au MEB de la composition témoin H montrant notamment la morphologie de la dispersion de sa poudre fluorée et du noir de carbone.

**Fig. 8i**

[Fig. 8i] est un cliché au MEB de la composition I selon l'invention montrant notamment la morphologie de la dispersion de sa poudre fluorée et de sa charge inorganique Barrisurf® HX.

**Fig. 8j**

[Fig. 8j] est un cliché au MEB de la composition témoin J montrant notamment la morphologie de la dispersion de sa poudre fluorée et du noir de carbone.

**Fig. 9**

[Fig. 9] est un graphique montrant l'évolution de la contrainte (Pa) en fonction du taux de cisaillement (s$^{-1}$), mesurée par rhéométrie capillaire pour la composition réticulable témoin H et pour la composition réticulable I selon l'invention, à chaque fois sur une paroi lisse de filière d'extrusion et sur une paroi rugueuse de filière d'extrusion.

**Fig. 10**

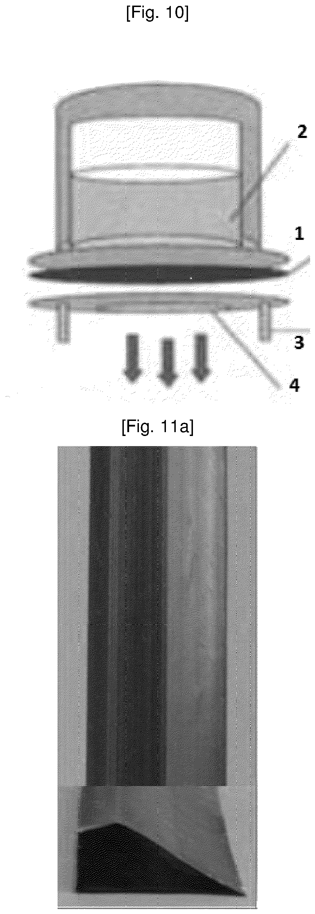

[Fig. 10] est une vue schématique frontale éclatée, légèrement en perspective, d'un dispositif de mesure du flux de perméation moyen Q d'une plaque formée d'une composition de caoutchouc par une essence sur 18 jours à 40° C selon la norme D 451652 de PSA de juin 2010.

**Fig. 11a**

[Fig. 11a] comprend deux photographies supérieures et inférieures montrant respectivement le dessus et une extrémité d'un extrudât d'une autre composition témoin M, obtenu par la filière de la figure 6.

**Fig. 11b**

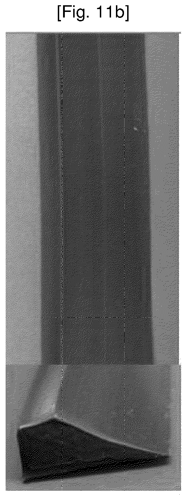

[Fig. 11b] comprend deux photographies supérieures et inférieures montrant respectivement le dessus et une extrémité d'un extrudât d'une composition N selon l'invention incorporant la charge Barrisurf® HX, obtenu par la filière de la figure 6.

**Fig. 11c**

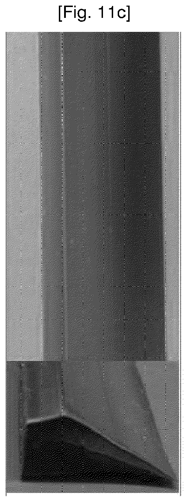

[Fig. 11c] comprend deux photographies supérieures et inférieures montrant respectivement le dessus et une extrémité d'un extrudât d'une composition O selon l'invention incorporant la charge Chinafill® 800, obtenu par la filière de la figure 6.

**Fig. 11d**

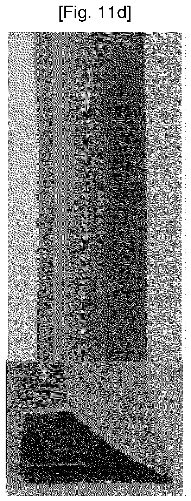

[Fig. 11d] comprend deux photographies supérieures et inférieures montrant respectivement le dessus et une extrémité d'un extrudât d'une composition P selon l'invention incorporant la charge Mistron® HAR, obtenu par la filière de la figure 6.

**Fig. 11e**

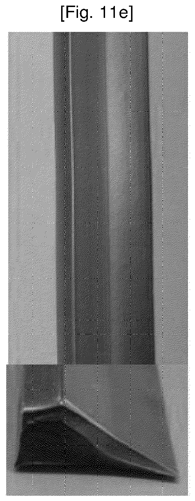

[Fig. 11e] comprend deux photographies supérieures et inférieures montrant respectivement le dessus et une extrémité d'un extrudât d'une composition Q selon l'invention incorporant la charge Suzorite® 325 HK, obtenu par la filière de la figure 6.

**Fig. 11f**

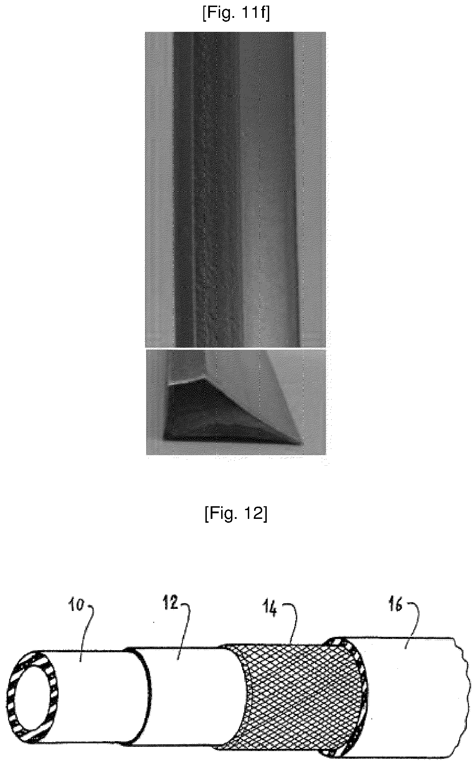

[Fig. 11f] comprend deux photographies supérieures et inférieures montrant respectivement le dessus et une extrémité d'un extrudât d'une composition R selon l'invention incorporant la charge « Mica F », obtenu par la filière de la figure 6.

**Fig. 12**

[Fig. 12] est une vue partielle en perspective avec arrachements partiels d'un tuyau de carburant selon un exemple de réalisation de l'invention, dont la couche interne est constituée d'une composition réticulée selon l'invention.

**Exemples de réalisation de l'invention**

Dans tous les exemples suivants, on a préparé les compositions réticulables à base d'un ou de deux FKM en mettant en oeuvre le procédé suivant.

a) étape de mélangeage thermomécanique en mélangeur interne :

- régulation à 35° C,
- début du cycle à une vitesse de rotation des pales du rotor de 40 tours/min,
- instant initial t0 : introduction de la gomme (i.e. du ou des FKM),
- t=1 min. : introduction des autres ingrédients de la composition à l'exception du système de réticulation au peroxyde, et pression du piston à $10^5$ Pa puis $3.10^5$ Pa,
- t=2 min.30 s : pression du piston à $3.10^5$ Pa et vitesse des pales de 50 tours/min.,
- t=3 min. : balayage,
- t=3 min. 30 s : changement de vitesse des pales à 80 tours/min.,
- t=6 min. ou 95° C à l'affichage : tombée, la température au pic étant d'environ 110° C.

b) Malaxage mécanique en mélangeur ouvert (sur cylindres) :

- ajout du système de réticulation au peroxyde, puis
- 7 passages au fin de la composition réticulable.

On a réticulé toutes les compositions testées à l'instant t95 à 180° C, sans étape de post-cuisson.

Le tableau 1 suivant recense les caractéristiques des poudres de PTFE utilisées dans les compositions testées (D50 étant mesuré selon ASTM D 4464).

[Tableau 1]

| Nom commercial | Fournisseur | Nature | Caractéristiques |
|---|---|---|---|
| Algoflon® L203 | Solvay | Poudre PTFE | BET > 7,5 $m^2$/g - D50 = 5 $\mu$m |
| Polymist® F5A EX | Solvay | Poudre PTFE | BET = 3 $m^2$/g - D50 = 12 $\mu$m |

Le tableau 2 suivant recense les caractéristiques des charges inorganiques à hauts facteurs de forme utilisées dans les compositions testées.

[Tableau 2]

| Nom commercial | Fournisseur | Nature | Caractéristiques |
|---|---|---|---|
| Chinafill® 800 | AKW | Kaolin | Epaisseur moyenne = 250 nm<br>Largeur moyenne = 10 μm<br>Facteur de forme = 40 |
| Barrisurf® HX | Imerys | Kaolin | Epaisseur moyenne = 150 nm<br>Largeur moyenne = 5 μm<br>Facteur de forme = 35 |
| Mistron® HAR | Imerys | Talc | Epaisseur moyenne = 150 nm<br>Largeur moyenne = 6 μm<br>Facteur de forme = 40 |
| Mica F | Aspanger | Mica | Epaisseur moyenne = 130 nm<br>Largeur moyenne = 16 μm<br>Facteur de forme = 125 |
| Suzorite® 325 HK | Imerys | Mica | Epaisseur moyenne = 450 nm<br>Largeur moyenne = 35 μm<br>Facteur de forme = 80 |

On a déterminé les facteurs de formes de ces charges en préparant des échantillons par métallisation Au/Pd, puis par la technique de microscopie électronique à balayage (MEB) au moyen d'un capteur Centaurus® (électrons rétrodiffusés) ou SE2 (électrons secondaires). Compte tenu de la définition du facteur de forme (« aspect ratio » en anglais) par le ratio de la dimension moyenne la plus grande (largeur des lamelles) sur la dimension moyenne la plus petite (épaisseur des lamelles), on a mesuré ces dimensions moyennes par observation au MEB, comme visible aux figures 1a-1b, 2a-2b, 3a-3b, 4a-4b et 5a-5b et détaillé au tableau 2.

**Première série d'essais** :

Cette première série montre notamment l'effet de l'ajout de la charge Chinafill® 800 dans des compositions témoin A et selon l'invention B, C, D, E, G, qui sont toutes à base d'un seul et même FKM de dénomination DAIEL G-902 (DAIKIN) et qui comprennent toutes 50 pce de poudre de PTFE de dénomination Algoflon® L203, alors que la composition F non conforme à l'invention à base du FKM « DAIEL G-902 » ne comprend que 15 pce de cette poudre de PTFE.
On a ajouté la charge Chinafill® 800 selon 13 pce à la composition B et selon 20 pce aux compositions C-D, et un coupage de 7 et 12 pce de Chinafill® 800 et de 6 et 8 pce graphite Timrex® C-Therm 002 aux compositions E et G, respectivement. La composition F est dépourvue de Chinafill® 800 et de toute autre charge inorganique, comprenant uniquement 10 pce d'un noir de carbone comme charge. Le système de réticulation utilisé était constitué de DHBP 45 (agent réticulant : peroxyde organique) et du coagent TAIC (liquide), et pour les seules compositions D, F et G on a en outre ajouté un agent d'aide à la mise en oeuvre (« VPA 2 »).

On a réalisé des essais d'extrusion Garvey sur les différentes compositions réticulables afin d'évaluer leur extrudabilité, i.e. aptitude à la mise en oeuvre par extrusion, en suivant les prescriptions de la norme NF T43-016. Rappelons que l'essai Garvey est une méthode d'appréciation usuelle de l'aptitude au boudinage des compositions de caoutchouc non réticulées. On a selon cet essai extrudé les différentes compositions avec une filière Garvey telle que celle visible à la photographie de la figure 6 (filière de forme sensiblement prismatique de section globalement trapézoïdale).

On a utilisé le système de classement A qui classe sur une échelle de 1 (mauvais) à 4 (bon) les paramètres suivants :

- gonflement et porosité,
- tranchant du bord (angle de 30° C),
- uniformité de la surface, et
- continuité des trois autres angles.

On suivi le protocole suivant pour l'essai d'extrusion.

On a réalisé l'extrusion sur une extrudeuse de laboratoire avec une vis de transport de diamètre D = 25 mm et de longueur 12D. On a procédé à l'alimentation en bande de 2 à 3 cm de large, et l'on a refroidi le galet bourreur avec un système de circulation d'eau. On a chauffé le corps de vis à 85° C par un régulateur (eau). On a chauffé la filière à 95° C ou 110° C (selon les essais) à l'aide d'un anneau chauffant.

Au cours de l'essai, on a mesuré la pression par un capteur situé au niveau de la tête de vis.

On a fait varier la vitesse de la vis entre 4 et 20 tours/min., la vitesse ayant été réglée suivant l'aspect de l'extrudât en sortie de filière.

On a placé l'extrudât sur un tapis roulant qui l'a entraîné tout au long de l'essai.

Le tableau 3 ci-après détaille les formulations des compositions A à G (quantités en pce), et le tableau 4 ci-après les résultats obtenus lors des essais d'extrusion dans la filière Garvey (vis chauffée à 85° C, filière à 95° C, vitesse de la vis de 8 tours/min.).

[Tableau 3]

|  | A | B | C | D | E | F | G |
|---|---|---|---|---|---|---|---|
| DAIEL G-902 | 100 | 100 | 100 | 100 | 100 | 100 | 100 |
| Noir MT N 991 | 5 | 2 | 2 | 2 | 2 | 10 | 2 |
| VPA 2 |  |  |  | 1 |  | 1 | 1 |
| TAIC liq | 2,1 | 2,1 | 2,1 | 2,1 | 2,1 | 2,1 | 2,1 |
| Algoflon L203 | 50 | 50 | 50 | 50 | 50 | 15 | 50 |
| Timrex C-Therm 002 |  |  |  |  | 6 |  | 8 |
| Chinafill 800 |  | 13 | 20 | 20 | 7 |  | 12 |
| DHBP 45 | 2 | 2 | 2 | 2 | 2 | 2 | 2 |

[Tableau 4]

|  | A | B | C | D | E | F | G |
|---|---|---|---|---|---|---|---|
| Amorçage de l'alimentation | Difficile | Bon | Bon | Bon | Bon | Bon | En partie bon |
| Refoulement au niveau du galet bourreur | Oui | Non | Non | Non | Non | Non | Non |
| Pression en sortie de filière (en $10^5$ Pa) | Varie de 40 à 4 | 45 | 40 | 45 | 45 | 35 | 45 |
| Aspect (classement système A) | 4.4.3.4 | 4.4.3.4 | 4.4.3.4 | 4.4.4.4 | 4.4.3.4 | 4.4.3.4 | 4.4.4.4 |

Les figures 7a à 7g montrent l'aspect des surfaces et des profils d'extrémité respectivement obtenus pour ces compositions A à G, suite à ces essais d'extrusion Garvey.

La composition témoin A n'est donc pas correctement extrudable, voir l'amorçage de l'alimentation, le refoulement indésirable à l'alimentation et la fluctuation de la pression d'extrusion obtenus pour la composition A sans charge Chinafill® 800.

Au contraire, les compositions B à E et G incorporant la charge Chinafill® 800, notamment quand elle est utilisée seule (voir compositions B, C, D), montrent une nette amélioration des conditions d'extrusion avec une résolution des problèmes de glissement de matière à l'alimentation et une stabilisation de la pression d'extrusion, sans dégrader la cotation Garvey sur les extrudâts obtenus, de même que pour la composition F non conforme à l'invention en dépit d'une pression en sortie de filière inférieure à celle relative aux compositions B à E et G.

Les figures 8a à 8g montrent les morphologies respectivement obtenues pour les compositions réticulées A à G, suite à la réticulation précitée au peroxyde (à t95 à 180° C, sans post-cuisson), avec la dispersion homogène de la poudre fluorée de PTFE et, pour les compositions B à G, de la charge Chinafill® 800.

Le tableau 5 ci-après montre les propriétés mesurées pour ces compositions A à G, tant à l'état non réticulé (viscosité Mooney mesurée selon la norme ASTM D 1646) que réticulé :
- propriétés en traction uniaxiale à l'état initial selon la norme ASTM D 412,

- résistance au déchirement Delft,
- dureté Shore A à 3 s mesurée à l'état initial selon la norme ASTM D2240,
- déformation rémanente à la compression DRC de type B mesurée à 22 heures, 135° C et 25 % de taux de compression, et
- perméabilité FAM B à 40° C (taux de perméation moyen Q moy sur 18 jours) mesurée sur une plaque selon la norme D 451652 de PSA (juin 2010).

[Tableau 5]

| | unité | A | B | C | D | E | F | G |
|---|---|---|---|---|---|---|---|---|
| **Compositions non réticulées** | | | | | | | | |
| ML(1+4) 100° C | MU | 56 | 56 | 60 | 55 | 54 | 46 | 59 |
| **Compositions réticulées** | | | | | | | | |
| Traction état initial | | | | | | | | |
| Résistance rupt. | MPa | 9,4 | 12,3 | 11,8 | 11,4 | 11,1 | 11,2 | 10,0 |
| Allongement rupt. | % | 358 | 346 | 310 | 333 | 364 | 403 | 319 |
| Module 50 % | MPa | 1,9 | 3,4 | 4,2 | 4,2 | 4,0 | 1,4 | 4,8 |
| Module 100 % | MPa | 2,5 | 5,0 | 6,2 | 5,7 | 5,0 | 2,1 | 5,7 |
| Module 200 % | MPa | 4,0 | 7,6 | 8,8 | 7,8 | 6,4 | 3,7 | 7,1 |
| Déchirement Delft | | | | | | | | |
| Résistance | N/mm | 19,2 | 18,9 | 27,1 | 17,4 | 20,6 | - | 22,8 |
| Dureté Shore A à 3 s | | | | | | | | |
| Etat initial | Sh A | 70 | 77 | 80 | 80 | 79 | 62 | 82 |
| DRC type B après 22 h à 135° C et 25 % de compression | | | | | | | | |
| DRC | % | 14 | 14 | 15 | 16 | 15 | 14 | 19 |
| Perméabilité - FAM B, à 40° C (taux de perméation moyen sur 18 jours) | | | | | | | | |
| Q moyen | g.h$^{-1}$.m$^{-2}$ | 0,32 | 0,16 | - | 0,23 | 0,18 | 0,65 | 0,19 |

La figure 10 montre le dispositif utilisé pour la mesure du taux de perméation moyen de la plaque 1 constituée de chaque composition testée par le carburant FAM B logé dans un réservoir 2 du dispositif, lequel est formé dans sa partie inférieure au moyen de vis traversant une grille de fermeture 4. De manière connue, le flux de perméation Q, exprimé en g.h$^{-1}$.m$^{-2}$, est ramené à une épaisseur nominale de plaque de 2 mm et est donné par la formule :

$$Q = (M_i - M_{i+1})_{max} / 24.S . e/2,$$

où

$(M_i - M_{i+1})_{max}$ est la différence de masse maximale, en g, entre deux pesées successives distantes de 24 heures, S est la surface en m$^2$ de le plaque-éprouvette en contact avec le carburant d'un côté et de l'autre à l'air libre, et e est l'épaisseur en mm de la plaque-éprouvette.

Le tableau 5 montre que la modification selon l'invention de la formule FKM-PTFE par l'ajout de la charge à haut facteur de forme Chinafill® 800 ne pénalise pas les propriétés mécaniques des compositions B à E et G selon l'invention à l'état réticulé par rapport à la composition témoin A dépourvue de cette charge, en améliorant même certaines (voir notamment la résistance à la rupture, les modules et la dureté Shore augmentés), et que cet ajout de la charge à haut facteur de forme permet même de réduire la perméabilité au carburant des compositions B, D, E, G par rapport à cette composition témoin A. Le tableau 5 montre également que l'utilisation de 15 pce de poudre micronisée de polymère fluoré confère à la composition réticulée F non conforme à l'invention une perméabilité au carburant et des propriétés mécaniques nettement pénalisées (voir modules), comparées à celles des compositions B, D, E et G selon l'invention.

**Deuxième série d'essais.**

Cette deuxième série montre notamment l'effet de l'ajout de la charge Barrisurf® HX dans des compositions selon l'invention I, L par rapport à des compositions témoin H, J, K sans charge à haut facteur de forme, qui sont toutes à base d'un coupage de deux FKM DAIEL G-902 (50 pce) et Tecnoflon P-459 (Solvay : 50 pce) et qui comprennent 50 pce (pour les compositions H, I, J) ou 62,5 pce (pour les compositions K, L) de poudre de PTFE de dénomination Polymist® F5AEX.

On a comparé l'ajout de 20 pce de la charge Barrisurf® HX aux compositions I et L de l'invention à l'ajout de 20 pce d'un noir de carbone à la composition J. Le système de réticulation et l'agent VPA 2 étaient les mêmes que précédemment.

Le tableau 6 ci-après détaille les formulations des compositions H à L (quantités en pce), et le tableau 7 ci-après les résultats obtenus lors des essais d'extrusion dans la même filière Garvey que précédemment (vis chauffée à 85° C, filière à 95° C, vitesse de la vis de 8 tours/min.).

[Tableau 6]

|  | H | I | J | K | L |
|---|---|---|---|---|---|
| DAIEL G-902 | 50 | 50 | 50 | 50 | 50 |
| Technoflon P-459 | 50 | 50 | 50 | 50 | 50 |
| Noir MT N 991 | 2 | 2 | 20 | 2 | 2 |
| VPA 2 | 1 | 1 | 1 | 1 | 1 |
| TAIC liq | 2,1 | 2,1 | 2,1 | 2,1 | 2,1 |
| Polymist F5AEX | 50 | 50 | 50 | 62,5 | 62,5 |
| Barrisurf HX |  | 20 |  |  | 20 |
| DHBP 45 | 2 | 2 | 2 | 2 | 2 |

[Tableau 7]

|  | H | I | J | K | L |
|---|---|---|---|---|---|
| Amorçage de l'alimentation | Bon | Bon | Bon | Bon | Bon |
| Pression en sortie de filière (en $10^5$ Pa) | Varie de 70 à 0 | 30 à 35 | Varie de 70 à 0 | Varie de 70 à 0 | 45 |
| Aspect (classement système A) | 4.2.3.3 | 4.2.3.3 | 4.2.2.3 | 4.2.3.3 | 4.2.3.3 |

Les compositions témoin H, J, K ne sont donc pas correctement extrudables, voir la fluctuation de la pression d'extrusion obtenue sans charge à haut facteur de forme. Au contraire, les compositions I et L de l'invention incorporant 20 pce de la charge Barrisurf® HX montrent une très nette amélioration des conditions d'extrusion avec une stabilisation de la pression d'extrusion (notamment grâce à la suppression du glissement dans la vis, comme expliqué ci-après), sans dégrader la cotation Garvey sur les extrudâts obtenus, en comparaison des compositions peu chargées H, K et de la composition I chargée avec 20 pce de noir de carbone.

Les figures 8h à 8j montrent les morphologies respectivement obtenues pour les compositions réticulées H, I, J, suite à leur réticulation au peroxyde (à t95 à 180° C, sans post-cuisson), avec la dispersion homogène de la poudre fluorée de PTFE et, pour la composition I de l'invention, de la charge Barrisurf® HX.

Le tableau 8 ci-après montre les propriétés mesurées comme précédemment pour ces compositions H à L, tant à l'état non réticulé que réticulé.

[Tableau 8]

|  | unité | H | I | J | K | L |
|---|---|---|---|---|---|---|
| **Compositions non réticulées** |  |  |  |  |  |  |
| ML(1 +4) 100° C | MU | 56 | 63 | 67 | 62 | 72 |

(suite)

| Compositions réticulées | | | | | | |
|---|---|---|---|---|---|---|
| Traction état initial | | | | | | |
| Résistance rupt. | MPa | 9,1 | 10,7 | 9,7 | 9,8 | 10,1 |
| Allongement rupt. | % | 337 | 298 | 282 | 270 | 215 |
| Module 50 % | MPa | 2,3 | 5,0 | 3,8 | 3,9 | 5,9 |
| Module 100 % | MPa | 2,7 | 6,2 | 4,8 | 4,7 | 7,3 |
| Module 200 % | MPa | 3,9 | 8,1 | 7,4 | 6,8 | 9,8 |
| Déchirement Delft | | | | | | |
| Résistance | N/mm | 15,7 | 19,3 | 15,3 | 13,3 | 15,6 |
| Dureté Shore A à 3 s | | | | | | |
| Etat initial | Sh A | 72 | 81 | 80 | 76 | 74 |
| DRC type B après 22 h à 135° C et 25 % de compression | | | | | | |
| DRC | % | 22 | 24 | 24 | 24 | 25 |
| Perméabilité - FAM B, à 40° C (taux de perméation moyen sur 18 jours) | | | | | | |
| Q moyen | $g.h^{-1}.m^{-2}$ | 0,44 | 0,24 | 0,48 | 0,35 | 0,18 |

Le tableau 8 montre que la modification selon l'invention de la formule FKM-PTFE par l'ajout de la charge à haut facteur de forme Barrisurf® HX ne pénalise pas les propriétés mécaniques des compositions I et L selon l'invention à l'état réticulé par rapport aux compositions témoin H, J, K dépourvues de cette charge, en améliorant même certaines (voir notamment la résistance à la rupture, les modules et la dureté Shore augmentés), et que cet ajout de la charge à haut facteur de forme permet même de réduire la perméabilité au carburant des compositions I, L, par rapport à ces compositions témoins H, J, K.

On a réalisé des mesures de glissement sur des parois de filière d'extrusion respectivement lisse et rugueuse, portant sur la composition témoin H et sur la composition de l'invention I, au moyen d'un rhéomètre capillaire pour mettre en évidence la différence de comportement entre ces deux compositions H et I (respectivement sans et avec la charge claire Barrisurf® HX), via des mesures comparatives sur une paroi de filière lisse et sur une paroi de filière rugueuse. On a suivi le protocole ci-après pour ces essais au rhéomètre capillaire.

On a caractérisé les compositions H et I à l'aide du rhéomètre à capillaire Göttfert 6000 afin d'observer le glissement à la paroi. On a procédé aux extrusions capillaires à 70° C au travers des filières suivantes de diamètre égal à 1 mm :

- filière rugueuse de longueur 5 mm pour évaluer le glissement à la paroi,
- filière lisse de longueur 5 mm pour évaluer le glissement à la paroi,
- filière de longueur quasi-nulle pour effectuer la correction de Bagley de la pression d'entrée.

On a utilisé un capteur de $10^8$ Pa pour mesurer les pressions aux différentes vitesses d'extrusion programmées, pour des taux de cisaillement allant de 0,3 s$^{-1}$ à 30 000 s$^{-1}$. On a mis en place la filière sélectionnée et le capteur de pression sélectionné, puis on a attendu une demi-heure environ pour que la température d'essai soit stabilisée. On a rempli le fourreau avec le matériau à tester (sous forme de granulés) et on l'a tassé à l'aide du pilon en laiton. On a fait descendre le piston jusqu'à l'engager dans le fourreau et constater la présence d'un extrudât. L'extrusion a débuté après le préchauffage programmé pour conditionner le matériau. Les vitesses programmées se sont succédé automatiquement. On a arrêté l'essai lorsque le piston est complètement descendu, ou lorsque la pression a excédé celle du capteur.

Les résultats obtenus sont visibles au graphique de la figure 9. Pour la composition H, on voit que les niveaux de contrainte en fonction du taux de cisaillement sont très différents entre la filière lisse et la filière rugueuse, signe d'un phénomène de glissement important pour cette composition témoin H. Au contraire, pour la composition I selon l'invention, les courbes filière lisse/ filière rugueuse sont quasiment confondues dès 10 s$^{-1}$ de taux de cisaillement, signe d'un faible glissement à la paroi.

**Troisième série** d'essais :

Cette troisième série montre notamment l'effet de l'ajout des cinq charges précitées à hauts facteurs de forme en relation avec les figures 1a à 5b dans une composition témoin M sans charge à haut facteur de forme et des compositions selon l'invention N, O, P, Q, R, qui sont toutes à base d'un coupage des deux FKM DAIEL G-902 (DAIKIN : 75 pce) et Tecnoflon P-459 (Solvay : 25 pce) et qui comprennent toutes 50 pce de poudre de PTFE de dénomination Algoflon® L203. On a ajouté chaque charge à haut facteur de forme selon 20 pce. Le système de réticulation et l'agent d'aide à la mise en oeuvre VPA 2 étaient les mêmes que précédemment.

Le tableau 9 ci-après détaille les formulations des compositions M à R (quantités en pce), et le tableau 10 ci-après les résultats obtenus lors des essais d'extrusion dans la même filière Garvey que précédemment (vis chauffée à 85° C, filière à 95° C, vitesse de la vis de 8 tours/min.).

[Tableau 9]

|  | M | N | O | P | Q | R |
|---|---|---|---|---|---|---|
| DAIEL G-902 | 75 | 75 | 75 | 75 | 75 | 75 |
| Tecnoflon P-459 | 25 | 25 | 25 | 25 | 25 | 25 |
| Noir MT N 991 | 2 | 2 | 2 | 2 | 2 | 2 |
| VPA 2 | 1 | 1 | 1 | 1 | 1 | 1 |
| TAIC liq | 2,1 | 2,1 | 2,1 | 2,1 | 2,1 | 2,1 |
| Algoflon L203 | 50 | 50 | 50 | 50 | 50 | 50 |
| Barrisurf HX |  | 20 |  |  |  |  |
| Chinafill 800 |  |  | 20 |  |  |  |
| Mistron HAR |  |  |  | 20 |  |  |
| Suzorite 325 HK |  |  |  |  | 20 |  |
| Mica F |  |  |  |  |  | 20 |
| DHBP 45 | 2 | 2 | 2 | 2 | 2 | 2 |

[Tableau 10]

|  | M | N | O | P | Q | R |
|---|---|---|---|---|---|---|
| Amorçage de l'alimentation | Bourrage | Bon | Bon | Bon | Bon | Bon |
| Pression en sortie de filière (en $10^5$ Pa) | 50 | 55 | 50 | 65 | 45 | 40 |
| Aspect (classement système A) | 4.4.4.4 | 4.4.4.4 | 4.4.4.4 | 4.4.3,5.4 | 4.4.4.4 | 4.4.3.4 |

Les figures 11a à 11g montrent l'aspect des surfaces et des profils d'extrémité respectivement obtenus pour ces compositions M à R, suite à ces essais d'extrusion Garvey.

La composition témoin M n'est donc pas correctement extrudable, voir l'amorçage de l'alimentation. Au contraire, les compositions N à R incorporant 20 pce des charges à hauts facteurs de forme correspondantes montrent une nette amélioration des conditions d'extrusion avec une résolution des problèmes de glissement de matière à l'alimentation et une stabilisation de la pression d'extrusion, sans dégrader la cotation Garvey sur les extrudâts obtenus.

Le tableau 11 ci-après montre les propriétés mesurées comme précédemment pour ces compositions M à R, tant à l'état non réticulé que réticulé.

[Tableau 11]

|  | unité | M | N | O | P | Q | R |
|---|---|---|---|---|---|---|---|
| **Compositions non réticulées** |  |  |  |  |  |  |  |
| ML(1+4) 100° C | MU | 54 | 56 | 56 | 61 | 57 | 54 |

(suite)

| Compositions réticulées | | | | | | | |
|---|---|---|---|---|---|---|---|
| Traction état initial | | | | | | | |
| Résistance rupt. | MPa | 10,5 | 9,6 | 8,7 | 9,7 | 9,3 | 9,4 |
| Allongement rupt. | % | 393 | 274 | 262 | 304 | 295 | 319 |
| Module 50 % | MPa | 1,8 | 4,5 | 4,0 | 4,3 | 4,2 | 3,7 |
| Module 100 % | MPa | 2,4 | 6,0 | 5,4 | 5,5 | 5,4 | 4,8 |
| Module 200 % | MPa | 3,5 | 8,1 | 7,5 | 7,2 | 7,2 | 6,6 |
| Déchirement Delft | | | | | | | |
| Résistance | N/mm | 10,8 | 19,6 | 12,6 | 19,4 | 12,6 | 19,4 |
| Dureté Shore A à 3 s | | | | | | | |
| Etat initial | Sh A | 69 | 81 | 80 | 81 | 80 | 79 |
| DRC type B après 22 h à 135° C et 25 % de compression | | | | | | | |
| DRC | % | 17 | 19 | 21 | 21 | 17 | 16 |
| Perméabilité - FAM B, à 40° C (taux de perméation moyen sur 18 jours) | | | | | | | |
| Q moyen | g.h$^{-1}$.m$^{-2}$ | 0,35 | 0,18 | 0,17 | 0,21 | 0,23 | 0,23 |

Le tableau 11 montre que la modification selon l'invention de la formule FKM-PTFE par l'ajout de chaque charge à haut facteur de forme testée ne pénalise pas les propriétés mécaniques des compositions N à R selon l'invention à l'état réticulé par rapport à la composition témoin M dépourvue de cette charge, en améliorant même certaines (voir notamment la résistance à la rupture, les modules et la dureté Shore augmentés), et que cet ajout de chaque charge à haut facteur de forme permet même de réduire la perméabilité au carburant des compositions N à R par rapport à cette composition témoin M.

La figure 12 montre un exemple de structure utilisable pour un tuyau de carburant selon l'invention, comprenant une couche radialement interne 10 (ou fourreau) constituée d'une composition de caoutchouc selon l'invention, une couche de caoutchouc intermédiaire 12 par exemple à base d'un caoutchouc d'épichlorhydrine (ECO), un renfort textile, 14 et une couche radialement externe 16 par exemple également à base d'un ECO, bien que d'autres structures et compositions de caoutchouc soient utilisables pour les couches autres que le fourreau.

**Revendications**

1. Composition de caoutchouc réticulable apte à être extrudée pour former une couche interne (10) d'un tuyau de carburant pour véhicule automobile, la composition étant à base d'au moins un fluoroélastomère (FKM) et comprenant une charge et une poudre micronisée d'au moins un polymère thermoplastique fluoré qui sont dispersées dans ledit au moins un fluoroélastomère, ladite poudre micronisée étant à base d'au moins un polytétrafluoroéthylène (PTFE) modifié ou non à titre dudit au moins un polymère thermoplastique fluoré, et présentant un diamètre moyen de particules D50 mesuré selon la norme ASTM D 4464 qui est compris entre 2 $\mu$m et 20 $\mu$m, dans laquelle la composition comprend ladite poudre micronisée selon une quantité supérieure à 20 pce (pce : parties en poids pour 100 parties d'élastomère(s)) et dans laquelle la charge comprend au moins une charge inorganique à lamelles qui présente un facteur de forme supérieur à 30 et qui est à base d'un phyllosilicate choisi parmi la kaolinite et les micas, ou est à base d'un talc, ledit facteur de forme étant défini comme étant le ratio d'une dimension moyenne la plus grande sur une dimension moyenne la plus petite des lamelles, ledit ratio étant mesuré par la technique de microscopie électronique à balayage via un capteur d'électrons rétrodiffusés ou un capteur SE2 d'électrons secondaires, en préparant des échantillons des charges par une métallisation Au/Pd selon la méthode décrite dans la description.

2. Composition réticulable selon la revendication 1, dans laquelle ladite au moins une charge inorganique a une plus petite dimension transversale moyenne qui définit une épaisseur moyenne de lamelles comprise entre 100 nm et 500 nm et une plus grande dimension moyenne qui définit une largeur moyenne de lamelles comprise entre 1 $\mu$m

et 50 μm.

3. Composition réticulable selon la revendication 1 ou 2, dans laquelle la composition comprend ladite poudre micronisée d'au moins un polymère fluoré selon une quantité égale ou supérieure à 30 pce.

4. Composition selon une des revendications précédentes, dans laquelle ladite poudre micronisée présente un diamètre moyen de particules D50 mesuré selon la norme ASTM D 4464 qui est compris entre 5 μm et 15 μm.

5. Composition réticulable selon une des revendications précédentes, dans laquelle la charge comprend ladite au moins une charge inorganique selon une fraction massique d'au moins 40 % et de préférence supérieure à 50 %.

6. Composition réticulable selon une des revendications précédentes, dans laquelle la composition comprend ladite poudre micronisée selon une quantité comprise entre 45 et 65 pce et ladite au moins une charge inorganique selon une quantité comprise entre 5 et 25 pce,

de préférence dans laquelle la charge comprend en outre une charge organique à base d'un noir de carbone et/ou d'un graphite, de préférence avec moins de 5 pce de noir de carbone et moins de 10 pce de graphite, et de préférence dans laquelle la composition comprend un système de réticulation comprenant un peroxyde ou un bisphénol, de préférence selon une quantité comprise entre 2 et 6 pce.

7. Composition réticulable selon une des revendications précédentes, dans laquelle la composition présente, après passage dans une filière d'extrusion Garvey, une pression appliquée à la composition mesurée en sortie de la filière qui est continûment comprise entre $25.10^5$ Pa et $70.10^5$ Pa et de préférence entre $30.10^5$ Pa et $65.10^5$ Pa, l'extrudeuse présentant les caractéristiques suivantes:

- une vis de transport de diamètre D égal à 25 mm et de longueur égale à 12D,
- une alimentation en bande de 2 à 3 cm de large,
- un galet bourreur refroidi avec un système de circulation d'eau,
- un corps de vis chauffé à 85° C par un régulateur au moyen d'eau,
- la filière étant chauffée à 95° C ou 110° C par un anneau chauffant,
- ladite pression appliquée à la composition en sortie de la filière étant mesurée par un capteur au niveau d'une tête de la vis,
- une vitesse de la vis variant entre 4 et 20 tours/min réglée suivant l'aspect de la composition extrudée en sortie de filière, et
- un tapis roulant sur lequel est disposée la composition pour son entraînement.

8. Composition réticulable selon une des revendications précédentes, dans laquelle ledit au moins un fluoroélastomère est un FKM choisi parmi les terpolymères fluorure de vinylidène (VDF) - hexafluoropropylène (HFP)

- tétrafluoroéthylène (TFE) à taux massique de fluor égal ou supérieur à 70 %, la composition présentant de préférence une viscosité Mooney ML(1+4) à 100° C mesurée selon la norme ASTM D 1646 comprise entre 50 et 75,

et de préférence dans laquelle la composition comprend au moins deux dits fluoroélastomères (FKM), comprenant un premier FKM et un second FKM de viscosités Mooney ML(1+10) à 121° C respectives, mesurées selon la norme ASTM D 1646, comprises entre 17 et 21 et entre 22 et 26, avec le premier FKM présent dans la composition selon une quantité d'au moins 50 pce, de préférence comprise entre 50 et 75 pce, et le second FKM présent dans la composition selon une quantité d'au plus 50 pce, de préférence comprise entre 25 et 50 pce.

9. Composition réticulable selon une des revendications 1 à 8, dans laquelle ladite au moins une charge inorganique est à base dudit phyllosilicate, dont le facteur de forme est d'au moins 35 et de préférence d'au moins 80, et de préférence dans laquelle ladite au moins une charge inorganique :

- comprend de la kaolinite, étant à base d'un kaolin dont de préférence une plus petite dimension transversale moyenne définit une épaisseur moyenne de lamelles comprise entre 120 nm et 280 nm et une plus grande dimension moyenne définit une largeur moyenne de lamelles comprise entre 4 μm et 12 μm, ou
- est à base d'un mica par exemple de type muscovite ou phlogopite dont le facteur de forme est de préférence d'au moins 120, et dont de préférence une plus petite dimension transversale moyenne définit une épaisseur moyenne de lamelles comprise entre 110 nm et 470 nm et une plus grande dimension moyenne définit une largeur moyenne de lamelles comprise entre 13 μm et 40 μm.

**10.** Composition réticulable selon une des revendications 1 à 8, dans laquelle ladite au moins une charge inorganique est à base d'un talc dont le facteur de forme est d'au moins 35, et dont une plus petite dimension transversale moyenne définit une épaisseur moyenne de lamelles de préférence comprise entre 120 nm et 180 nm et une plus grande dimension moyenne définit une largeur moyenne de lamelles de préférence comprise entre 4 μm et 8 μm.

**11.** Composition de caoutchouc réticulée apte à former une couche interne (10) extrudée d'un tuyau de carburant pour véhicule automobile, dans laquelle la composition réticulée est le produit d'une réticulation chimique par un peroxyde ou un bisphénol de la composition réticulable selon l'une des revendications précédentes,

de préférence dans laquelle la composition présente un flux de perméation Q moyen à une essence alcoolisée de type FAM B telle que décrite dans la norme DIN 51604, ledit flux de perméation étant mesuré à travers une plaque formée de la composition sur 18 jours à 40° C selon la norme D 451652 de PSA de juin 2010, qui est inférieure à 0,30 g.h$^{-1}$.m$^{-2}$ et de préférence inférieure à 0,25 g.h$^{-1}$.m$^{-2}$, pouvant être inférieure à 0,20 g.h$^{-1}$.m$^{-2}$, et de préférence dans laquelle la composition satisfait à l'une au moins des conditions (i) à (iii) ci-après :

(i) l'un au moins des modules sécants M50, M100 et M200 suivants respectivement à 50 %, 100 % et 200 % de déformation, mesurés en traction uni-axiale selon la norme ASTM D 412 :

M50 supérieur à 3 MPa, de préférence égal ou supérieur à 4 MPa,
M100 supérieur à 4 MPa, de préférence égal ou supérieur à 5 MPa,
M200 supérieur à 6 MPa, de préférence égal ou supérieur à 7 MPa;

(ii) une résistance à la rupture R/r, mesurée en traction uni-axiale selon la norme ASTM D 412, supérieure à 8 MPa et de préférence supérieure à 10 MPa ; et
(iii) une dureté Shore A mesurée après 3 secondes selon la norme ASTM D2240 qui est supérieure à 70 et de préférence égale ou supérieure à 80.

**12.** Procédé de préparation d'une composition réticulable selon une des revendications 1 à 10, dans lequel le procédé comprend les étapes suivantes :

a) mélangeage thermomécanique dudit au moins un fluoroélastomère (FKM), de ladite charge et de ladite poudre micronisée d'au moins un polymère thermoplastique fluoré et d'autres ingrédients de la composition à l'exception d'un système de réticulation, le mélangeage étant de préférence mis en oeuvre à une température de tombée entre 90 et 100° C avec une température au pic entre 105 et 115° C;
b) malaxage mécanique du mélange obtenu à l'étape a) sur des cylindres avec ajout du système de réticulation comprenant de préférence un peroxyde ou un bisphénol, pour l'obtention de la composition réticulable.

**13.** Extrudât tubulaire apte à former après réticulation une couche interne (10) d'un tuyau de carburant pour véhicule automobile, dans lequel l'extrudât est constitué d'une composition réticulable selon une des revendications 1 à 10.

**14.** Tuyau de carburant pour véhicule automobile à moteur thermique ou hybride, en particulier pour un carburant de type essence, comportant une couche radialement interne (10) et au moins une couche radialement externe (16), dans lequel la couche radialement interne (10) est constituée d'une composition réticulée selon la revendication 11, le tuyau comportant de préférence en outre, entre les couches radialement interne (10) et externe (16), au moins une couche radialement intermédiaire (12) et un renfort textile (14).

**15.** Circuit d'alimentation de carburant d'un véhicule automobile à moteur thermique ou hybride comprenant des canalisations entre un réservoir de carburant et une rampe d'injection du carburant, dans lequel l'une au moins des canalisations comprend un tuyau selon la revendication 14.

**Patentansprüche**

**1.** Vernetzbare Kautschukzusammensetzung, die dazu geeignet ist, extrudiert zu werden, um eine Innenschicht (10) eines Kraftstoffschlauchs für Kraftfahrzeuge zu bilden, wobei die Zusammensetzung auf wenigstens einem Fluorelastomer (FKM) fluorierten thermoplastischen Polymer umfasst, die in dem wenigstens einen Fluorelastomer dispergiert sind, wobei das mikronisierte Pulver auf wenigstens einem Polytetrafluorethylen (PTFE) basiert, das mit dem wenigstens einen fluorierten thermoplastischen Polymer modifiziert ist oder nicht, und einen mittleren Teilchendurchmesser D50, gemessen nach ASTM D 4464, aufweist, der zwischen 2 $\mu$m und 20 $\mu$m liegt, wobei die Zusammensetzung das mikronisierte Pulver in einer Menge von mehr als 20 pce (pce : Gewichtsteile pro 100 Teile Elastomer(e)) aufweist und wobei der Füllstoff wenigstens einen anorganischen Lamellenfüllstoff umfasst, der einen Formfaktor von mehr als 30 aufweist und auf einem Phyllosilikat basiert, das aus Kaolinit und Glimmer gewählt ist, oder auf einem Talkum basiert, wobei der Formfaktor als das Verhältnis einer größten mittleren Abmessung zu einer kleinsten mittleren Abmessung der Lamellen definiert ist, wobei das Verhältnis durch die Technik der Rasterelektronenmikroskopie über einen Rückstreuelektronensensor oder einen SE2-Sekundärelektronensensor gemessen wird, indem Proben der Füllstoffe durch eine Au/Pd-Metallisierung gemäß dem in der Beschreibung beschriebenen Verfahren hergestellt werden.

2. Vernetzbare Zusammensetzung nach Anspruch 1, wobei der wenigstens eine anorganische Füllstoff eine kleinere mittlere Querschnittsabmessung aufweist, die eine mittlere Lamellendicke zwischen 100 nm und 500 nm definiert, und eine größere mittlere Abmessung aufweist, die eine mittlere Lamellenbreite zwischen 1 $\mu$m und 50 $\mu$m definiert.

3. Vernetzbare Zusammensetzung nach Anspruch 1 oder 2, wobei die Zusammensetzung das mikronisierte Pulver von wenigstens einem Fluorpolymer in einer Menge von 30 pce oder mehr umfasst.

4. Zusammensetzung nach einem der vorhergehenden Ansprüche, wobei das mikronisierte Pulver einen mittleren Teilchendurchmesser D50, gemessen nach ASTM D 4464, aufweist, der zwischen 5 $\mu$m und 15 $\mu$m liegt.

5. Vernetzbare Zusammensetzung nach einem der vorhergehenden Ansprüche, wobei der Füllstoff den wenigstens einen anorganischen Füllstoff in einem Massenanteil von wenigstens 40 % und bevorzugt mehr als 50 % umfasst.

6. Vernetzbare Zusammensetzung nach einem der vorhergehenden Ansprüche, wobei die Zusammensetzung das mikronisierte Pulver in einer Menge von 45 bis 65 pce und den wenigstens einen anorganischen Füllstoff in einer Menge von 5 bis 25 pce enthält,

   bevorzugt wobei der Füllstoff ferner einen organischen Füllstoff auf der Basis von Ruß und/oder Graphit enthält, bevorzugt mit weniger als 5 pce Ruß und weniger als 10 pce Graphit,
   und bevorzugt wobei die Zusammensetzung ein Vernetzungssystem aufweist, das ein Peroxid oder ein Bisphenol umfasst, bevorzugt in einer Menge zwischen 2 und 6 pce.

7. Vernetzbare Zusammensetzung nach einem der vorhergehenden Ansprüche, wobei die Zusammensetzung nach dem Durchgang durch eine Garvey-Extrusionsdüse einen auf die Zusammensetzung ausgeübten Druck, gemessen am Ausgang der Düse, aufweist, der kontinuierlich zwischen $25.10^5$ Pa und $70.10^5$ Pa und bevorzugt zwischen $30.10^5$ Pa und $65.10^5$ Pa liegt,
   wobei der Extruder die folgenden Merkmale aufweist:

   - eine Förderschnecke mit einem Durchmesser D von 25 mm und einer Länge von 12D,
   - eine Bandzuführung mit einer Breite von 2 bis 3 cm,
   - eine Speisewalze, die mit einem Wasserumlaufsystem gekühlt wird,
   - einen Schneckenkörper, der von einem Regler mittels Wasser auf 85° C erhitzt wird,
   - wobei die Düse durch einen Heizring auf 95° C oder 110° C erhitzt wird,
   - wobei der Druck, der auf die Zusammensetzung am Ausgang der Düse ausgeübt wird, von einem Sensor an einem Kopf der Schnecke gemessen wird,
   - eine Schneckengeschwindigkeit zwischen 4 und 20 U/min, die je nach Aussehen der am Ausgang der Düse extrudierten Zusammensetzung eingestellt wird, und
   - ein Förderband, auf dem die Zusammensetzung zu deren Antrieb angeordnet ist.

8. Vernetzbare Zusammensetzung nach einem der vorhergehenden Ansprüche, wobei das wenigstens eine Fluorelastomer ein FKM ist, gewählt aus Terpolymeren Vinylidenfluorid (VDF) - Hexafluorpropylen (HFP) - Tetrafluorethylen (TFE) mit einem Fluormassenanteil von größer gleich 70 %, wobei die Zusammensetzung bevorzugt eine Mooney-Viskosität ML(1+4) bei 100 °C, gemessen nach ASTM D 1646, zwischen 50 und 75 aufweist,
und wobei die Zusammensetzung bevorzugt wenigstens zwei sogenannte Fluorelastomere (FKM) umfasst, die ein erstes FKM und ein zweites FKM mit jeweiligen Mooney-Viskositäten ML(1+10) bei 121° C, gemessen nach ASTM D 1646, im Bereich von 17 bis 21 und 22 bis 26 umfassen, wobei das erste FKM in der Zusammensetzung in einer Menge von wenigstens 50 pce, bevorzugt zwischen 50 und 75 pce, vorhanden ist, und das zweite FKM in der Zusammensetzung in einer Menge von höchstens 50 pce, bevorzugt zwischen 25 und 50 pce, vorhanden ist.

9. Vernetzbare Zusammensetzung nach einem der Ansprüche 1 bis 8, wobei der wenigstens eine anorganische Füllstoff auf dem Phyllosilikat basiert, dessen Formfaktor wenigstens 35 und bevorzugt wenigstens 80 beträgt, und wobei bevorzugt der wenigstens eine anorganische Füllstoff:

- Kaolinit umfasst und auf einem Kaolin basiert, bei dem bevorzugt eine kleinere mittlere Querschnittsabmessung eine mittlere Lamellendicke zwischen 120 nm und 280 nm definiert und eine größere mittlere Abmessung eine mittlere Lamellenbreite zwischen 4 $\mu$m und 12 $\mu$m definiert,
oder
- auf einem Glimmer beispielsweise vom Typ Muskovit oder Phlogopit basiert, dessen Formfaktor bevorzugt wenigstens 120 beträgt und bei dem bevorzugt eine kleinere mittlere Querabmessung eine mittlere Lamellendicke zwischen 110 nm und 470 nm definiert und eine größere mittlere Abmessung eine mittlere Lamellenbreite zwischen 13 $\mu$m und 40 $\mu$m definiert.

10. Vernetzbare Zusammensetzung nach einem der Ansprüche 1 bis 8, wobei der wenigstens eine anorganische Füllstoff auf Talkum basiert, dessen Formfaktor wenigstens 35 beträgt und dessen kleinere mittlere Querabmessung eine mittlere Lamellendicke bevorzugt zwischen 120 nm und 180 nm definiert und dessen größere mittlere Abmessung eine mittlere Lamellenbreite bevorzugt zwischen 4 $\mu$m und 8 $\mu$m definiert.

11. Vernetzte Kautschukzusammensetzung, die dazu geeignet ist, eine extrudierte Innenschicht (10) eines Kraftstoffschlauchs für Kraftfahrzeuge zu bilden, wobei die vernetzte Zusammensetzung das Produkt einer chemischen Vernetzung durch ein Peroxid oder ein Bisphenol der vernetzbaren Zusammensetzung nach einem der vorhergehenden Ansprüche ist,

bevorzugt wobei die Zusammensetzung einen durchschnittlichen Permeationsfluss Q zu einem alkoholischen Benzin vom Typ FAM B, wie in DIN 51604 beschrieben, aufweist, wobei der Permeationsfluss durch eine aus der Zusammensetzung gebildete Platte über 18 Tage bei 40 °C gemäß PSA D 451652 vom Juni 2010 gemessen wird, der weniger als 0,30 g.h$^{-1}$m$^{-2}$ und bevorzugt weniger als 0,25 g.h$^{-1}$m$^{-2}$ beträgt, wobei er weniger als 0,20 g.h$^{-1}$m$^{-2}$ betragen kann,
und bevorzugt wobei die Zusammensetzung wenigstens eine der folgenden Bedingungen (i) bis (iii) erfüllt:

(i) wenigstens eines der folgenden Sekantenmodule M50, M100 und M200 bei 50%, 100% bzw. 200 % Verformung, gemessen in einachsigem Zug nach ASTM D 412:

M50 größer als 3 MPa, bevorzugt größer gleich 4 MPa,
M100 größer als 4 MPa, bevorzugt größer gleich 5 MPa,
M200 größer als 6 MPa, bevorzugt größer gleich 7 MPa;

(ii) eine Bruchfestigkeit R/r, gemessen in einachsigem Zug nach ASTM D 412, von mehr als 8 MPa und bevorzugt mehr als 10 MPa; und
(iii) eine Shore-A-Härte, gemessen nach 3 Sekunden gemäß ASTM D224O, die größer als 70 und bevorzugt größer gleich 80 ist.

12. Verfahren zur Herstellung einer vernetzbaren Zusammensetzung nach einem der Ansprüche 1 bis 10, wobei das Verfahren die folgenden Schritte umfasst:

a) thermomechanisches Mischen des wenigstens einen Fluorelastomers (FKM), des Füllstoffs und des mikronisierten Pulvers aus wenigstens einem fluorierten thermoplastischen Polymer und anderen Bestandteilen der Zusammensetzung mit Ausnahme eines Vernetzungssystems, wobei das Mischen bevorzugt bei einer Falltemperatur zwischen 90 und 100 °C mit einer Spitzentemperatur zwischen 105 und 115 °C durchgeführt wird;
b) mechanisches Kneten der in Schritt a) erhaltenen Mischung auf Walzen unter Zugabe des Vernetzungssystems, das bevorzugt ein Peroxid oder ein Bisphenol umfasst, um die vernetzbare Zusammensetzung zu erhalten.

13. Rohrförmiges Extrudat, das nach dem Vernetzen eine Innenschicht (10) eines Kraftstoffschlauchs für ein Kraftfahrzeug bilden kann, wobei das Extrudat aus einer vernetzbaren Zusammensetzung gemäß einem der Ansprüche 1 bis 10 besteht.

14. Kraftstoffschlauch für ein Kraftfahrzeug mit Verbrennungsmotor oder Hybridmotor, insbesondere für einen Kraftstoff vom Benzintyp, umfassend eine radial innere Schicht (10) und wenigstens eine radial äußere Schicht (16), wobei die radial innere Schicht (10) aus einer vernetzten Zusammensetzung nach Anspruch 11 besteht, wobei der Schlauch bevorzugt ferner zwischen der radial inneren (10) und der radial äußeren (16) Schicht wenigstens eine radial mittlere Schicht (12) und eine Textilverstärkung (14) aufweist.

15. Kraftstoffversorgungssystem eines Kraftfahrzeugs mit Verbrennungsmotor oder Hybridmotor, das Leitungen zwischen einem Kraftstofftank und einer Kraftstoffeinspritzleiste umfasst, wobei wenigstens eine der Leitungen einen Schlauch nach Anspruch 14 umfasst.

**Claims**

1. Crosslinkable rubber composition able to be extruded to form an inner layer (10) of a fuel hose for a motor vehicle, the composition being based on at least one fluoroelastomer (FKM) and comprising a filler and a micronised powder of at least one fluorinated thermoplastic polymer which are dispersed in said at least one fluoroelastomer, said micronised powder being based on at least one polytetrafluoroethylene (PTFE) modified or not in terms of said at least one fluorinated thermoplastic polymer, and having an average particle diameter D50 measured according to the standard ASTM D 4464 which is comprised between 2 $\mu$m and 20 $\mu$m,
   wherein the composition comprises said micronised powder according to a quantity greater than 20 phr (phr: parts by weight per 100 parts of elastomer(s)) and wherein the filler comprises at least one inorganic filler having lamellas which has an aspect ratio greater than 30 and which is based on a phyllosilicate chosen from kaolinite and micas, or is based on a talc, said aspect ratio being defined as being the ratio of an average largest dimension over an average smallest dimension of the lamellas, said ratio being measured by the scanning electron microscopy technique via a backscattered electrons sensor or a secondary electrons SE2 sensor, by preparing samples of the fillers by a Au/Pd metallisation according to the method described in the description.

2. Crosslinkable composition according to claim 1, in which said at least one inorganic filler has an average transversal smaller dimension which defines an average thickness of lamellas comprised between 100 nm and 500 nm and an average larger dimension which defines an average width of lamellas comprised between 1 $\mu$m and 50 $\mu$m.

3. Crosslinkable composition according to claim 1 or 2, in which the composition comprises said micronised powder of at least one fluorinated polymer according to a quantity greater than or equal to 30 phr.

4. Composition according to one of the preceding claims, in which said micronised powder has an average particle diameter D50 measured according to the standard ASTM D 4464 which is comprised between 5 $\mu$m and 15 $\mu$m.

5. Crosslinkable composition according to one of the preceding claims, in which the filler comprises said at least one inorganic filler according to a mass fraction of at least 40% and preferably greater than 50%.

6. Crosslinkable composition according to one of the preceding claims, in which the composition comprises said micronised powder according to a quantity comprised between 45 and 65 phr and said at least one inorganic filler according to a quantity comprised between 5 and 25 phr,

   preferably in which the filler further comprises an organic filler based on a carbon black and/or a graphite, preferably with less than 5 phr of carbon black and less than 10 phr of graphite,
   and preferably in which the composition comprises a crosslinking system comprising a peroxide or a bisphenol, preferably according to a quantity comprised between 2 and 6 phr.

7. Crosslinkable composition according to one of the preceding claims, in which the composition has, after passing through a Garvey extrusion die, a pressure applied to the composition measured at the outlet of the die that is continuously comprised between $25.10^5$ Pa and $70.10^5$ Pa and preferably between $30.10^5$ Pa and $65.10^5$ Pa, with the extruder having the following characteristics:

   - a conveying screw of diameter D equal to 25 mm and of length equal to 12D,
   - a feed belt 2 to 3 cm wide,

- a feed roller cooled with a water circulation system,
- a screw body heated to 85° C by a regulator by means of water,
- the die being heated to 95° C or 110° C by a heating ring,
- said pressure applied to the composition at the outlet of the die being measured by a sensor at a head of the screw,
- a speed of the screw varying between 4 and 20 rpm regulated according to the aspect of the extruded composition at the outlet of the die, and
- a conveyor belt on which the composition is disposed for the driving thereof.

8. Crosslinkable composition according to one of the preceding claims, in which said at least one fluoroelastomer is an FKM chosen from terpolymers of vinylidene fluoride (VDF) - hexafluoropropylene (HFP) - tetrafluoroethylene (TFE) with a fluorine mass rate greater than or equal to 70%, the composition preferably having a Mooney viscosity ML(1+4) at 100° C measured according to the standard ASTM D 1646 comprised between 50 and 75,
and preferably in which the composition comprises at least two of said fluoroelastomers (FKM), comprising a first FKM and a second FKM with respective Mooney viscosities ML(1+10) at 121° C, measured according to the standard ASTM D 1646, comprised between 17 and 21 and between 22 and 26, with the first FKM present in the composition according to a quantity of at least 50 phr, preferably comprised between 50 and 75 phr, and the second FKM present in the composition according to a quantity of at most 50 phr, preferably comprised between 25 and 50 phr.

9. Crosslinkable composition according to one of claims 1 to 8, in which said at least one inorganic filler is based on said phyllosilicate, of which the aspect ratio is at least 35 and preferably at least 80.
and preferably in which said at least one inorganic filler:

- comprises kaolinite, being based on a kaolin of which preferably an average transversal smaller dimension defines an average thickness of lamellas comprised between 120 nm and 280 nm and an average larger dimension defines an average width of lamellas comprised between 4 μm and 12 μm, or
- is based on a mica for example of the muscovite or phlogopite type of which the aspect ratio is preferably at least 120, and of which preferably an average transversal smaller dimension defines an average thickness of lamellas comprised between 110 nm and 470 nm and an average larger dimension defines an average width of lamellas comprised between 13 μm and 40 μm.

10. Crosslinkable composition according to one of claims 1 to 8, in which said at least one inorganic filler is based on a talc of which the aspect ratio is at least 35, and of which an average transversal smaller dimension defines an average thickness of lamellas preferably comprised between 120 nm and 180 nm and an average larger dimension defines an average width of lamellas preferably comprised between 4 μm and 8 μm.

11. Crosslinked rubber composition able to form an extruded inner layer (10) of a fuel hose for a motor vehicle, in which the crosslinked composition is the product of a chemical crosslinking by a peroxide or a bisphenol of the crosslinkable composition according to one of the preceding claims,

preferably in which the composition has an average permeation flux Q with an alcohol essence of the FAM B type such as described in the standard DIN 51604, said permeation flux being measured through a plate formed from the composition over 18 days at 40° C according to the standard D 451652 of PSA of June 2010, which is less than 0.30 g.h$^{-1}$.m$^{-2}$ and preferably less than 0.25 g.h$^{-1}$.m$^{-2}$, being able to be less than 0.20 g.h$^{-1}$.m$^{-2}$, and preferably in which the composition satisfies at least one of the conditions (i) to (iii) hereinafter:

(i) at least one of the following secant moduli M50, M100 and M200 respectively at 50%, 100% and 200% deformation, measured in uni-axial tensile force according to the standard ASTM D 412:

M50 greater than 3 MPa, preferably greater than or equal to 4 MPa,
M100 greater than 4 MPa, preferably greater than or equal to 5 MPa,
M200 greater than 6 MPa, preferably greater than or equal to 7 MPa;

(ii) a resistance to breaking R/r, measured in uni-axial tensile force according to the standard ASTM D 412, greater than 8 MPa and preferably greater than 10 MPa; and
(iii) a Shore A hardness measured after 3 seconds according to the standard ASTM D2240 which is greater than 70 and preferably greater than or equal to 80.

**12.** Method for preparing a crosslinkable composition according to one of claims 1 to 10, in which the method comprises the following steps:

a) thermomechanical mixing of said at least one fluoroelastomer (FKM), of said filler and of said micronised powder of at least one fluorinated thermoplastic polymer and of other ingredients of the composition with the exception of a crosslinking system, the mixing being preferably implemented at a falling temperature between 90 and 100° C with a peak temperature between 105 and 115° C;

b) mechanical mixing of the mixture obtained in step a) on cylinders with the adding of the crosslinking system preferably comprising a peroxide or a bisphenol, for the obtaining of the crosslinkable composition.

**13.** Tubular extrudate able to form after crosslinking an inner layer (10) of a fuel hose for a motor vehicle, in which the extrudate is formed from a crosslinkable composition according to one of claims 1 to 10.

**14.** Fuel hose for a motor vehicle with a combustion or hybrid engine, in particular for a fuel of the petrol type, including a radially internal layer (10) and at least one radially external layer (16), in which the radially internal layer (10) is formed from a crosslinked composition according to claim 11, with the hose preferably further including, between the radially internal (10) and external (16) layers, at least one radially intermediate layer (12) and a textile reinforcement (14).

**15.** Fuel feed circuit of a motor vehicle with a combustion or hybrid engine comprising lines between a fuel tank and a fuel injection rail, in which at least one of the lines comprises a hose according to claim 14.

[Fig. 1a]

[Fig. 1b]

[Fig. 2a]

[Fig. 2b]

[Fig. 3a]

[Fig. 3b]

[Fig. 4a]

[Fig. 4b]

[Fig. 5a]

[Fig. 5b]

10 µm    Grand. = 1.54 K X    Suzorite 325 HK    WD = 12.9 mm   EHT = 20.00 kV   Signal A = SE2
Diaphragme: Dimension = 60.00 µm

[Fig. 6]

[Fig. 7a]

[Fig. 7b]

[Fig. 7c]

[Fig. 7d]

[Fig. 7e]

[Fig. 7f]

[Fig. 7g]

[Fig. 8a]

[Fig. 8b]

[Fig. 8c]

[Fig. 8d]

[Fig. 8e]

[Fig. 8f]

[Fig. 8g]

[Fig. 8h]

[Fig. 8i]

[Fig. 8j]

[Fig. 9]

[Fig. 10]

[Fig. 11a]

[Fig. 11b]

[Fig. 11c]

EP 3 719 065 B1

[Fig. 11d]

[Fig. 11e]

[Fig. 11f]

[Fig. 12]

## RÉFÉRENCES CITÉES DANS LA DESCRIPTION

**Documents brevets cités dans la description**

- EP 3026078 A1
- DE 102014223979 A1
- DE 102009003528 A1